# EUROPEAN PATENT APPLICATION

(11) **EP 4 317 222 A1**
(43) Date of publication of application: **07.02.2024**
(21) Application number: 22775845.5
(22) Date of filing: 25.03.2022
(51) Int. Cl.: C08F 220/10

(54) **(METH)ACRYLIC ACID ESTER-BASED COPOLYMER AND CURABLE COMPOSITION**

(30) Priority: 26.03.2021 JP 2021052540
(71) Applicant: Kaneka Corporation, Osaka-shi, Osaka 530-8288 (JP)
(72) Inventor: MIYAFUJI, Kiyoshi, Takasago-shi, Hyogo 676-866 (JP)
(74) Representative: Vossius & Partner Patentanwälte Rechtsanwälte mbB
(86) International application number: PCT/JP2022/014602
(87) International publication number: WO 2022/203064

(57) **Abstract**

A (meth)acrylic ester copolymer (A) has a reactive silicon group represented by the following formula (1): -SiR¹_{c}X_{3-c} (1), wherein R¹ is a substituted or unsubstituted hydrocarbon group having 1 to 20 carbon atoms, X is a hydroxy group or a hydrolyzable group, and c is 0 or 1 A monomer component of the copolymer includes a (meth)acrylic ester (a1); a polyoxyalkylene polymer (a2) having more than one (meth)acryloyl groups per molecule; and a chain transfer agent (a3) having a mercapto group. The molar ratio of the polyoxyalkylene polymer (a2) to the chain transfer agent (a3) is 0.06 or more. The monomer component further includes a monomer (a4) having a reactive silicon group and a polymerizable unsaturated group, and/or the chain transfer agent (a3) further has a reactive silicon group.

## Description

### Technical Field

The present invention relates to a (meth)acrylic ester copolymer having a reactive silicon group, a method for producing the copolymer, and a curable composition containing the copolymer.

### Background Art

An organic polymer that has a silicon group having a hydroxy or hydrolyzable group on a silicon atom and capable of forming a siloxane bond through a hydrolysis-condensation reaction (this silicon group may be referred to as a "reactive silicon group" hereinafter) undergoes a reaction under the effect of moisture or the like even at room temperature. Crosslinking of such an organic polymer through a siloxane condensation reaction of the reactive silicon group is known to give a rubbery cured product.

Among this kind of organic polymers, a polyoxyalkylene polymer having a reactive silicon group has a relatively low viscosity and thus exhibits high workability when a composition containing the polyoxyalkylene polymer is prepared or used. Such a polyoxyalkylene polymer is widely used in various products such as a sealing material, an adhesive, and a paint because the resulting cured product has a good balance among performance characteristics such as mechanical properties, weathering resistance, and dynamic durability (see Patent Literature 1).

A curable composition is known in which a reactive silicon group-containing polyoxyalkylene polymer and a reactive silicon group-containing (meth)acrylic ester polymer are used in combination to improve the weathering resistance and adhesion of the reactive silicon group-containing polyoxyalkylene polymer (see Patent Literature 2). The curable composition is used as a weather-resistant sealant or an industrial adhesive.

Patent Literature 3 describes a curable resin that cures at a high speed and has excellent adhesion, with an aim to overcome the disadvantage of low curing speed of a one-part moisture-curable adhesive made with modified silicone or acrylic-modified silicone. The curable resin is a reactive silicon group-containing graft copolymer synthesized by radical polymerization of an oligomer having a polyether backbone and having double bonds at both ends of the backbone, a vinyl monomer such as a (meth)acrylic ester, and a chain transfer agent.

### Citation List

### Patent Literature

PTL 1: Japanese Laid-Open Patent Application Publication No. S52-73998
PTL 2: Japanese Laid-Open Patent Application Publication No. S59-122541
PTL 3: Japanese Patent No. 5082851

### Summary of Invention

### Technical Problem

Desirably, a polymer having a reactive silicon group has a low viscosity to be easy to handle before curing and exhibits good physical properties after curing.

However, the reactive silicon group-containing graft copolymer described in Patent Literature 3 is unsatisfactory in terms of physical properties exhibited after curing and leaves room for improvement.

In view of the above circumstances, the present invention aims to provide: a reactive silicon group-containing (meth)acrylic ester copolymer that has a low viscosity and that exhibits good physical properties after curing; and a curable composition containing the copolymer.

### Solution to Problem

As a result of intensive studies with the goal of solving the above problem, the present inventors have found that the problem can be solved by using particular monomers and a particular chain transfer agent in particular proportions in a monomer component of a reactive silicon group-containing (meth)acrylic ester polymer, and have completed the present invention based on this finding.

Specifically, a first aspect of the present invention relates to a (meth)acrylic ester copolymer (A) having a reactive silicon group represented by the following formula (1): -SiR¹_{c}X_{3-c} (1), wherein R¹ is a substituted or unsubstituted hydrocarbon group having 1 to 20 carbon atoms, X is a hydroxy group or a hydrolyzable group, and c is 0 or 1, wherein a monomer component of the copolymer (A) includes: a (meth)acrylic ester (a1); a polyoxyalkylene polymer (a2) having more than one (meth)acryloyl groups per molecule; and a chain transfer agent (a3) having a mercapto group, a molar ratio of the polyoxyalkylene polymer (a2) to the chain transfer agent (a3) having a mercapto group is 0.06 or more, and the monomer component further includes a monomer (a4) having a reactive silicon group and a polymerizable unsaturated group, and/or the chain transfer agent (a3) having a mercapto group further has a reactive silicon group.

Preferably, a value calculated by the following expression is 0.65 or more: (weight-average molecular weight of copolymer (A))/(weight-average molecular weight of polyoxyalkylene polymer (a2)).

Preferably, the polyoxyalkylene polymer (a2) constitutes 0.08 to 6.0 mol% of the monomer component.

Preferably, the chain transfer agent (a3) having a mercapto group constitutes 0.4 to 15 mol% of the monomer component.

Preferably, the polyoxyalkylene polymer (a2) has a number-average molecular weight of 50,000 or less.

Preferably, the polyoxyalkylene polymer (a2) is in an amount of 60 wt% or less of the monomer component.

Preferably, the copolymer (A) has a weight-average molecular weight of 80,000 or less.

Preferably, the copolymer (A) has a dispersity of 3.0 to 11.0.

Preferably, c is 0 in the formula (1).

Preferably, the (meth)acrylic ester (a1) includes at least one monomer selected from the group consisting of a methacrylic ester, isobomyl acrylate, dicyclopentenyl acrylate, and dicyclopentanyl acrylate.

Preferably, the at least one monomer selected as the (meth)acrylic ester (a1) from the group consisting of a methacrylic ester, isobornyl acrylate, dicyclopentenyl acrylate, and dicyclopentanyl acrylate constitutes 60 wt% or more of the total monomer component excluding the polyoxyalkylene polymer (a2).

Preferably, the (meth)acrylic ester copolymer (A) has a sulfur atom concentration of 700 to 20,000 ppm.

A second aspect of the present invention relates to a (meth)acrylic ester copolymer (A) having a reactive silicon group represented by the following formula (1): -SiR¹_{c}X_{3-c} (1), wherein R¹ is a substituted or unsubstituted hydrocarbon group having 1 to 20 carbon atoms, X is a hydroxy group or a hydrolyzable group, and c is 0 or 1, wherein the copolymer (A) has a structure in which two first molecular chains are bonded to each other via one second molecular chain, both ends of the second molecular chain are bonded to a non-terminal moiety of one of the first molecular chains and a non-terminal moiety of the other first molecular chain, respectively, each of the first molecular chains includes a molecular chain of a (meth)acrylic ester polymer, the second molecular chain includes a molecular chain of a polyoxyalkylene polymer, the reactive silicon group is bonded to each of the first molecular chains, each of the first molecular chains has, at one end thereof, a structure represented by -S-R³, wherein S is a sulfur atom and R³ is a hydrocarbon group optionally having the reactive silicon group, and a molar ratio of the polyoxyalkylene polymer to the structure represented by -S-R³ is 0.06 or more.

A third aspect of the present invention relates to a curable composition containing either of the above (meth)acrylic ester copolymers (A) or to a cured product of the curable composition.

A fourth aspect of the present invention relates to a method for producing a (meth)acrylic ester copolymer (A) having a reactive silicon group represented by the following formula (1): -SiR¹_{c}X_{3-c} (1), wherein R¹ is a substituted or unsubstituted hydrocarbon group having 1 to 20 carbon atoms, X is a hydroxy group or a hydrolyzable group, and c is 0 or 1, the method including: copolymerizing a monomer component, wherein the monomer component includes: a (meth)acrylic ester (a1); a polyoxyalkylene polymer (a2) having more than one (meth)acryloyl groups per molecule; and a chain transfer agent (a3) having a mercapto group, a molar ratio of the polyoxyalkylene polymer (a2) to the chain transfer agent (a3) having a mercapto group is 0.06 or more, and the monomer component further includes a monomer (a4) having a reactive silicon group and a polymerizable unsaturated group, and/or the chain transfer agent (a3) having a mercapto group further has a reactive silicon group.

### Advantageous Effects of Invention

The present invention can provide: a reactive silicon group-containing (meth)acrylic ester copolymer that has a low viscosity and that exhibits good physical properties (such as high elongation and strength) after curing; and a curable composition containing the copolymer. The reactive silicon group-containing (meth)acrylic ester copolymer according to the present invention includes a block copolymer and can have a relatively low viscosity despite having a high weight-average molecular weight.

### Description of Embodiments

Hereinafter, embodiments of the present invention will be described in detail. The present invention is not limited to the embodiments described below.

### <<(Meth)acrylic Ester Copolymer (A)>>

A (meth)acrylic ester copolymer (A) has a reactive silicon group represented by the following formula (1) at a molecular chain end and/or in a side chain (non-terminal moiety).

-SiR¹_{c}X_{3-c} (1)

In the formula, R¹ is a substituted or unsubstituted hydrocarbon group having 1 to 20 carbon atoms, X is a hydroxy group or a hydrolyzable group, and c is 0 or 1.

The number of carbon atoms in the hydrocarbon group represented by R¹ is preferably from 1 to 10, more preferably from 1 to 5, and even more preferably from 1 to 3. Specific examples of R¹ include methyl, ethyl, chloromethyl, methoxymethyl, and N,N-diethylaminomethyl groups. R¹ is preferably a methyl group or an ethyl group.

Examples of X include a hydroxy group, hydrogen, halogens, and alkoxy, acyloxy, ketoximate, amino, amide, acid amide, aminooxy, mercapto, and alkenyloxy groups. Among these, alkoxy groups such as methoxy and ethoxy groups are more preferred in terms of moderate hydrolyzability and ease of handling. Methoxy and ethoxy groups are particularly preferred.

The integer c is 0 or 1. To obtain a cured product having a high Young's modulus, c is preferably 0.

Specific examples of the reactive silicon group of the (meth)acrylic ester copolymer (A) include, but are not limited to, trimethoxysilyl, triethoxysilyl, tris(2-propenyloxy)silyl, triacetoxysilyl, dimethoxymethylsilyl, diethoxymethylsilyl, dimethoxyethylsilyl, (chloromethyl)dimethoxysilyl, (chloromethyl)diethoxysilyl, (methoxymethyl)dimethoxysilyl, (methoxymethyl)diethoxysilyl, (N,N-diethylaminomethyl)dimethoxysilyl, and (N,N-diethylaminomethyl)diethoxysilyl groups. Among these, methyldimethoxysilyl, trimethoxysilyl, triethoxysilyl, (chloromethyl)dimethoxysilyl, (methoxymethyl)dimethoxysilyl, (methoxymethyl)diethoxysilyl, and (N,N-diethylaminomethyl)dimethoxysilyl groups are preferred since they exhibit high activity and allow for obtaining a cured product having good mechanical properties. To obtain a cured product having a high Young's modulus, trimethoxysilyl and triethoxysilyl groups are more preferred, and a trimethoxysilyl group is even more preferred.

The reactive silicon group amount in the (meth)acrylic ester copolymer (A) is not limited to a particular range, but is preferably 0.06 mmol/g or more, more preferably 0.08 mmol/g or more, and even more preferably 0.1 mmol/g or more. The reactive silicon group amount is preferably 1.0 mmol/g or less. To prevent reduced elongation of the resulting cured product, the reactive silicon group amount is more preferably 0.5 mmol/g or less and particularly preferably 0.3 mmol/g or less.

The (meth)acrylic ester copolymer (A) is a polymer formed by copolymerization of a monomer component including at least a (meth)acrylic ester (a1), a polyoxyalkylene polymer (a2) having more than one (meth)acryloyl groups per molecule, and a chain transfer agent (a3) having a mercapto group. The term "(meth)acryl" as used herein means "acryl and/or methacryl".

The (meth)acrylic ester copolymer (A) has a reactive silicon group when either or both of the following two requirements are met.
Requirement 1: The monomer component further includes a monomer (a4) having a reactive silicon group and a polymerizable unsaturated group.
Requirement 2: The chain transfer agent (a3) having a mercapto group further has a reactive silicon group.

To obtain a cured product having high elongation, the amount of reactive silicon groups introduced as a result of Requirement 2 being met is preferably greater than the amount of reactive silicon groups introduced as a result of Requirement 1 being met. Specifically, the amount of reactive silicon groups introduced as a result of Requirement 1 being met is preferably 0.01 mmol/g or more, more preferably 0.03 mmol/g or more, and even more preferably 0.05 mmol/g or more. The amount of the reactive silicon groups introduced as a result of Requirement 1 being met is preferably 1.0 mmol/g or less and more preferably 0.5 mmol/g or less. The amount of reactive silicon groups introduced as a result of Requirement 2 being met is preferably 0.2 mmol/g or more, more preferably 0.3 mmol/g or more, and even more preferably 0.5 mmol/g or more. The amount of the reactive silicon groups introduced as a result of Requirement 2 being met is preferably 1.5 mmol/g or less and more preferably 1.0 mmol/g or less.

To obtain a cured product having high strength, it is preferable to introduce reactive silicon groups by meeting both of Requirements 1 and 2. Specifically, the amount of reactive silicon groups introduced as a result of Requirement 1 being met is preferably 0.1 mmol/g or more, more preferably 0.2 mmol/g or more, and even more preferably 0.3 mmol/g or more. The amount of the reactive silicon groups introduced as a result of Requirement 1 being met is preferably 1.8 mmol/g or less and more preferably 1.0 mmol/g or less. The amount of reactive silicon groups introduced as a result of Requirement 2 being met is preferably 0.1 mmol/g or more, more preferably 0.2 mmol/g or more, and even more preferably 0.3 mmol/g or more. The amount of the reactive silicon groups introduced as a result of Requirement 2 being met is preferably 1.5 mmol/g or less and more preferably 1.0 mmol/g or less.

### <(Meth)acrylic Ester (a1)>

Examples of the (meth)acrylic ester (a1) include, but are not limited to, methyl (meth)acrylate, ethyl (meth)acrylate, n-propyl (meth)acrylate, isopropyl (meth)acrylate, n-butyl (meth)acrylate, isobutyl (meth)acrylate, *tert*-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, stearyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, an ethylene oxide adduct of (meth)acrylic acid, 2,2,2-trifluoroethyl (meth)acrylate, 3,3,3-trifluoropropyl (meth)acrylate, 3,3,4,4,4-pentafluorobutyl (meth)acrylate, 2-perfluoroethyl-2-perfluorobutylethyl (meth)acrylate, trifluoromethyl (meth)acrylate, perfluoroethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, 2-perfluorohexadecylethyl (meth)acrylate, dimethylaminoethyl (meth)acrylate, chloroethyl (meth)acrylate, tetrahydrofurfuryl (meth)acrylate, glycidyl (meth)acrylate, and 2-aminoethyl (meth)acrylate. One of these (meth)acrylic esters may be used alone, or two or more thereof may be used in combination.

The (meth)acrylic ester (a1) is preferably an alkyl (meth)acrylate.

In terms of ensuring both high flexibility and high stiffness, the amount of the (meth)acrylic ester (a1) is preferably 40 wt% or more, more preferably 45 wt% or more, even more preferably 50 wt% or more, still even more preferably 55 wt% or more, and yet even more preferably 60 wt% or more relative to the total monomer component of the (meth)acrylic ester copolymer (A). In terms of retention of adhesion, the content of the (meth)acrylic ester (a1) is preferably 50 wt% or more, more preferably 55 wt% or more, and even more preferably 60 wt% or more relative to the total monomer component of the (meth)acrylic ester copolymer (A).

To obtain a cured product having high strength, the (meth)acrylic ester (a1) is preferably an alkyl (meth)acrylate whose alkyl has 1 to 4 carbon atoms. The alkyl (meth)acrylate whose alkyl has 1 to 4 carbon atoms is preferably contained in an amount of 40 wt% or more, more preferably 45 wt% or more, even more preferably 50 wt% or more, relative to the total monomer component of the (meth)acrylic ester copolymer (A).

To form a rigid polymer chain and obtain a cured product having high strength, the (meth)acrylic ester (a1) preferably includes at least one monomer selected from the group consisting of a methacrylic ester, isobomyl acrylate, dicyclopentenyl acrylate, and dicyclopentanyl acrylate. In particular, the at least one monomer selected as the (meth)acrylic ester (a1) from the group consisting of a methacrylic ester, isobornyl acrylate, dicyclopentenyl acrylate, and dicyclopentanyl acrylate preferably constitutes 60 wt% or more, more preferably 70 wt% or more, of the total monomer component excluding the polyoxyalkylene polymer (a2).

### <Polyoxyalkylene Polymer (a2) Having More Than One (Meth)acryloyl Groups per Molecule>

Although being a polymer in itself, the polyoxyalkylene polymer (a2) serves as one of the monomers of the (meth)acrylic ester copolymer (A). By virtue of having (meth)acryloyl groups, the polyoxyalkylene polymer (a2) is copolymerizable with another monomer such as the (meth)acrylic ester (a1). Additionally, the polyoxyalkylene polymer (a2) can function as a so-called polyfunctional macromonomer since it has more than one (meth)acryloyl groups per molecule. In the (meth)acrylic ester copolymer (A), the backbone (second molecular chain described later) of the polyoxyalkylene polymer (a2) can form a structure crosslinking two molecular chains (first molecular chains described later) each of which is composed of a polymer of the (meth)acrylic ester (a1) etc. The polyoxyalkylene polymer (a2) may be referred to as a "polyfunctional macromonomer (a2)" hereinafter.

The backbone of the polyfunctional macromonomer (a2) is a polyoxyalkylene polymer. Examples of the backbone of the polyfunctional macromonomer (a2) include, but are not limited to, polyoxyethylene, polyoxypropylene, polyoxybutylene, polyoxytetramethylene, polyoxyethylene-polyoxypropylene copolymer, and polyoxypropylene-polyoxybutylene copolymer. Among these, polyoxypropylene is preferred.

The backbone of the polyoxyalkylene polymer may be linear or branched and is preferably linear.

The (meth)acryloyl groups of the polyfunctional macromonomer (a2) are preferably represented by the following formula (2).

CH₂=C(R²)-COO-Z (2)

In the formula, R² is hydrogen or a methyl group, and Z is the backbone of the polyfunctional macromonomer (a2).

The polyfunctional macromonomer (a2) has more than one (meth)acryloyl groups on average per molecule. The number of (meth)acryloyl groups is preferably from 1.1 to 5, more preferably from 1.3 to 4, even more preferably from 1.6 to 2.5, and particularly preferably from 1.8 to 2.0 on average per molecule of the polyfunctional macromonomer (a2). The polyfunctional macromonomer (a2) may have only acryloyl groups, only methacryloyl groups, or both acryloyl and methacryloyl groups as the (meth)acryloyl groups.

The polyfunctional macromonomer (a2) may have a (meth)acryloyl group at a molecular chain end of a polyoxyalkylene polymer, in a side chain of the polyoxyalkylene polymer, or both at the molecular chain end and in the side chain. In terms of achieving good mechanical properties, the polyfunctional macromonomer (a2) preferably has a (meth)acryloyl group at the molecular chain end. The polyfunctional macromonomer (a2) particularly preferably has a linear backbone and has (meth)acryloyl groups at both ends of the molecular chain of the linear backbone.

The method for synthesizing the polyfunctional macromonomer (a2) is not limited to a particular technique. An exemplary method is to prepare a polyoxyalkylene polymer having more than one hydroxy groups per molecule (preferably, a linear polyoxyalkylene polymer having hydroxy groups at both ends thereof) and introduce (meth)acryloyl groups by making use of the hydroxy groups.

An example of the method for synthesizing the polyfunctional macromonomer (a2) is one in which a polyoxyalkylene polymer having hydroxy groups is reacted with a compound having an isocyanate group and a (meth)acryloyl group to form urethane bonds and thus introduce (meth)acryloyl groups.

Specific examples of the compound having an isocyanate group and a (meth)acryloyl group include isocyanatoethyl (meth)acrylate, isocyanatopropyl (meth)acrylate, isocyanatobutyl (meth)acrylate, and isocyanatohexyl (meth)acrylate.

Another example of the method for synthesizing the polyfunctional macromonomer (a2) is one in which a polyoxyalkylene polymer having hydroxy groups is reacted with a diisocyanate compound to introduce isocyanate groups into the polymer and then the polymer is reacted with a compound having a hydroxy group and a (meth)acryloyl group to introduce (meth)acryloyl groups.

Specific examples of the diisocyanate compound include tolylene diisocyanate, hexamethylene diisocyanate, isophorone diisocyanate, and 4,4'-diphenylmethane diisocyanate.

Specific examples of the compound having a hydroxy group and a (meth)acryloyl group include hydroxybutyl (meth)acrylate, hydroxypropyl (meth)acrylate, hydroxyethyl (meth)acrylate, polyethylene glycol mono(meth)acrylate, and polypropylene glycol mono(meth)acrylate.

Still another example of the method for synthesizing the polyfunctional macromonomer (a2) is one in which a polyoxyalkylene polymer having hydroxy groups is reacted with an acid anhydride to introduce carboxyl groups into the polymer and then the polymer is reacted with a compound having an epoxy group and a (meth)acryloyl group to introduce (meth)acryloyl groups.

Specific examples of the acid anhydride include succinic anhydride, maleic anhydride, phthalic anhydride, tetrahydrophthalic anhydride, hexahydrophthalic anhydride, methyltetrahydrophthalic anhydride, methylhexahydrophthalic anhydride, methyl himic anhydride, trimellitic anhydride, methyl nadic anhydride, and dodecylsuccinic anhydride.

Specific examples of the compound having an epoxy group and a (meth)acryloyl group include glycidyl (meth)acrylate.

Yet another example of the method for synthesizing the polyfunctional macromonomer (a2) is to allow a polyoxyalkylene polymer having hydroxy groups to undergo dehydration condensation with methacrylic acid or acrylic acid. To carry out a reaction under mild conditions, the polyoxyalkylene polymer having hydroxy groups may be reacted with methacryloyl chloride, methacryloyl bromide, methacryloyl iodide, acryloyl chloride, acryloyl bromide, or acryloyl iodide.

The number-average molecular weight of the polyfunctional macromonomer (a2) is not limited to a particular range. In terms of ensuring good mechanical properties and adhesion of the resulting cured product while ensuring the ease of handling of the polyfunctional macromonomer (a2), the number-average molecular weight is preferably 500 or more, more preferably 1,000 or more, and even more preferably 2,000 or more. The number-average molecular weight is preferably 100,000 or less, more preferably 50,000 or less, even more preferably 40,000 or less, still even more preferably 30,000 or less, particularly preferably 15,000 or less, and most preferably 10,000 or less.

The weight-average molecular weight of the polyfunctional macromonomer (a2) is not limited to a particular range. In terms of ensuring good mechanical properties and adhesion of the resulting cured product while ensuring the ease of handling of the polyfunctional macromonomer (a2), the weight-average molecular weight is preferably 500 or more, preferably 1,000 or more, and even more preferably 2,500 or more. The weight-average molecular weight is preferably 130,000 or less, more preferably 65,000 or less, even more preferably 60,000 or less, still even more preferably 20,000 or less, and most preferably 13,000 or less.

The polyfunctional macromonomer (a2) is not limited to having a particular molecular weight distribution (weight-average molecular weight (Mw)/number-average molecular weight (Mn)), but preferably has a narrow molecular weight distribution. To be specific, the dispersity Mw/Mn is preferably less than 2.0, more preferably 1.6 or less, even more preferably 1.5 or less, still even more preferably 1.4 or less, and particularly preferably 1.3 or less.

The number-average molecular weight (Mn) and weight-average molecular weight (Mw) of the polyfunctional macromonomer (a2) are measured by GPC (polystyrene equivalent). The details of the measurement method will be described in Examples.

The (meth)acrylic ester copolymer (A) includes a (meth)acrylic ester polymer molecular chain composed of a polymer of the (meth)acrylic ester (a1) etc. and a polyoxyalkylene polymer molecular chain derived from the polyfunctional macromonomer (a2). Since the polyfunctional macromonomer (a2) has more than one (meth)acryloyl groups which are polymerizable groups per molecule, the (meth)acrylic ester copolymer (A) can have a structure in which more than one (meth)acrylic ester polymer molecular chains are bonded to one polyoxyalkylene polymer molecular chain. The polyoxyalkylene polymer molecular chain may be introduced at an end of the (meth)acrylic ester polymer molecular chain or in a side chain (non-terminal moiety) of the (meth)acrylic ester polymer molecular chain. In terms of adhesion, the polyoxyalkylene polymer molecular chain is preferably introduced in a side chain of the (meth)acrylic ester polymer molecular chain.

In particular, in the case where the polyfunctional macromonomer (a2) has (meth)acryloyl groups at both ends of a polyoxyalkylene polymer molecular chain, an H-shaped structure can be formed in which (meth)acrylic ester polymer molecular chains are bonded to both ends of the polyoxyalkylene polymer molecular chain. The polyoxyalkylene polymer molecular chain corresponds to the horizontal bar of "H", and the (meth)acrylic ester polymer molecular chains correspond to the two vertical bars of "H". The H-shaped structure will be described later.

The content of the polyfunctional macromonomer (a2) is preferably from 1 to 70 wt%, more preferably from 5 to 60 wt%, and even more preferably from 10 to 50 wt% relative to the total monomer component of the (meth)acrylic ester copolymer (A). To obtain a cured product having a high Young's modulus, the content of the polyfunctional macromonomer (a2) is preferably 60 wt% or less, more preferably 50 wt% or less, and even more preferably 35 wt% or less. To obtain a cured product having a low Young's modulus, the content of the polyfunctional macromonomer (a2) is preferably more than 35 wt%.

The polyfunctional macromonomer (a2) preferably constitutes 0.08 to 6.0 mol%, more preferably 0.1 to 5.0 mol%, even more preferably 0.15 to 2.3 mol%, of the monomer component of the (meth)acrylic ester copolymer (A). When the content of the polyfunctional macromonomer (a2) is within the above range, the effect of the use of the polyfunctional macromonomer (a2) can be achieved while gelation is prevented during synthesis of the (meth)acrylic ester copolymer (A).

The average number of the molecules of the polyfunctional macromonomer (a2) per molecule of the (meth)acrylic ester copolymer (A) is preferably from 0.03 to 2.0 in terms of the strength of a cured product resulting from curing of the (meth)acrylic ester copolymer (A). The average number is more preferably at least 0.04, even more preferably 0.05 or more, still even more preferably 0.07 or more, and particularly preferably 0.08 or more. The average number is more preferably at most 1.5 and even more preferably 1.0 or less. The average number can be calculated by the following expression.

Expression: number-average molecular weight of (meth)acrylic ester copolymer (A) (g/mol)/(weight of (meth)acrylic ester copolymer (A) (g)/(number of moles of polyoxyalkylene polymer (a2)))

### <Chain Transfer Agent (a3) Having Mercapto Group>

The inclusion of the chain transfer agent (a3) having a mercapto group in the monomer component of the (meth)acrylic ester copolymer (A) can allow the (meth)acrylic ester copolymer (A) to have a relatively narrow molecular weight distribution and can prevent gelation during synthesis of the (meth)acrylic ester copolymer (A), despite the use of the polyfunctional macromonomer (a2). Additionally, the inclusion of the chain transfer agent (a3) allows for preferential synthesis of a polymer molecule in which one molecule of the polyfunctional macromonomer (a2) is introduced in one molecule of the (meth)acrylic ester copolymer (A).

The chain transfer agent (a3) having a mercapto group may have no reactive silicon group, but preferably further has a reactive silicon group. When the chain transfer agent (a3) having a mercapto group further has a reactive silicon group, the reactive silicon group can be introduced at an end of a (meth)acrylic ester polymer molecular chain.

Examples of the chain transfer agent (a3) having a mercapto group include, but are not limited to, 3-mercaptopropyldimethoxymethylsilane, 3-mercaptopropyltrimethoxysilane, (mercaptomethyl)dimethoxymethylsilane, (mercaptomethyl)trimethoxysilane, n-dodecyl mercaptan, tert-dodecyl mercaptan, and lauryl mercaptan.

The content of the chain transfer agent (a3) having a mercapto group is preferably from 0.1 to 11 wt%, more preferably from 0.1 to 10 wt%, even more preferably from 0.3 to 7 wt%, and still even more preferably from 0.5 to 5 wt% relative to the total monomer component of the (meth)acrylic ester copolymer (A).

The chain transfer agent (a3) having a mercapto group preferably constitutes 0.1 to 20 mol%, more preferably 0.4 to 15 mol%, even more preferably 0.5 to 10 mol%, particularly preferably 0.6 to 8 mol%, of the monomer component of the (meth)acrylic ester copolymer (A). The effect of the use of the chain transfer agent (a3) having a mercapto group can be achieved when the content of the chain transfer agent (a3) is within the above range.

To increase the strength of a cured product resulting from curing of the (meth)acrylic ester copolymer (A), the content of the polyfunctional macromonomer (a2) and the content of the chain transfer agent (a3) having a mercapto group are adjusted such that the molar ratio of the polyoxyalkylene polymer (a2) to the chain transfer agent (a3) having a mercapto group is 0.06 or more. If the molar ratio is less than 0.06, the weight-average molecular weight of the (meth)acrylic ester copolymer (A) cannot be high enough, and the strength of the resulting cured product is insufficient. The molar ratio is preferably 0.08 or more, more preferably 0.1 or more, even more preferably 0.12 or more, and particularly preferably 0.15 or more. The upper limit of the molar ratio is not limited to a particular value, but the molar ratio is preferably 1 or less and more preferably 0.5 or less.

The (meth)acrylic ester copolymer (A) can have a substituent (a structure represented by -S-R³ described later) derived from the chain transfer agent (a3) having a mercapto group, and thus can contain sulfur atoms. The sulfur atom concentration in the (meth)acrylic ester copolymer (A) is preferably from 700 to 20,000 ppm and more preferably from 1,000 to 15,000 ppm.

The method for measuring the sulfur atom concentration is not limited to a particular technique. The sulfur atom concentration can be measured by a known elemental analysis method such as organic elemental analysis or fluorescent X-ray analysis. The sulfur atom concentration may be a theoretical value calculated from the total amount of the monomer component used to produce the (meth)acrylic ester copolymer (A) and the amount of the chain transfer agent (a3) having a mercapto group.

### <Monomer (a4) Having Reactive Silicon Group and Polymerizable Unsaturated Group>

The monomer (a4) having a reactive silicon group and a polymerizable unsaturated group is an optional monomer. The monomer (a4) need not be used, but is preferably used. The use of the monomer (a4) allows for introduction of a reactive silicon group in a side chain (non-terminal moiety) of a (meth)acrylic ester polymer molecular chain.

Examples of the monomer (a4) having a reactive silicon group and a polymerizable unsaturated group include: compounds having a (meth)acryloxy group and a reactive silicon group, such as 3-(meth)acryloxypropyltrimethoxysilane, 3-(meth)acryloxypropyltriethoxysilane, 3-(meth)acryloxypropyldimethoxymethylsilane, (meth)acryloxymethyltrimethoxysilane, and (meth)acryloxymethyldimethoxymethylsilane; and compounds having a vinyl group and a reactive silicon group, such as vinyltrimethoxysilane and vinyltriethoxysilane. One of these compounds may be used alone, or two or more thereof may be used in combination.

In the case of using the monomer (a4), the content of the monomer (a4) is preferably from 0.1 to 50 wt%, more preferably from 0.3 to 30 wt%, and even more preferably from 0.5 to 20 wt% relative to the total monomer component of the (meth)acrylic ester copolymer (A). In terms of improving the thixotropy of a curable composition and obtain a cured product having high elongation, the content of the monomer (a4) is preferably 10 wt% or less, more preferably 5 wt% or less, and even more preferably 3 wt% or less.

### <Another Monomer (a5)>

The monomer component of the (meth)acrylic ester copolymer (A) may or may not include another monomer (a5) that is not categorized as any of the compounds (a1) to (a4) described in detail above.

Examples of the other monomer (a5) include: (meth)acrylic monomers that are categorized neither as the (meth)acrylic ester (a1) nor as the monomer (a4) having a reactive silicon group and a polymerizable unsaturated group; and monomers other than such (meth)acrylic monomers. Specific examples of the other monomer (a5) include: (meth)acrylic acid; styrenic monomers such as styrene, vinyltoluene, α-methylstyrene, chlorostyrene, and styrenesulfonic acid; fluorine-containing vinyl monomers such as perfluoroethylene, perfluoropropylene, and vinylidene fluoride; maleic acid; maleic acid derivatives such as maleic anhydride, monoalkyl maleates, and dialkyl maleates; fumaric acid; fumaric acid derivatives such as monoalkyl fumarates and dialkyl fumarates; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; vinyl ester monomers such as vinyl acetate, vinyl propionate, vinyl pivalate, vinyl benzoate, and vinyl cinnamate; olefin monomers such as ethylene and propylene; conjugated diene monomers such as butadiene and isoprene; (meth)acrylamide; (meth)acrylonitrile; and vinyl monomers such as vinyl chloride, vinylidene chloride, allyl chloride, allyl alcohol, ethyl vinyl ether, and butyl vinyl ether. One of these monomers may be used alone, or two or more thereof may be used in combination.

The number-average molecular weight of the (meth)acrylic ester copolymer (A) is not limited to a particular range. The number-average molecular weight as determined by GPC analysis as a polystyrene equivalent molecular weight is preferably from 500 to 50,000, more preferably from 500 to 30,000, and particularly preferably from 1,000 to 10,000. In particular, the number-average molecular weight is preferably 7,000 or less to obtain the (meth)acrylic ester copolymer (A) having a low viscosity.

The weight-average molecular weight of the (meth)acrylic ester copolymer (A) is not limited to a particular range The weight-average molecular weight as determined by GPC analysis as a polystyrene equivalent molecular weight is preferably from 500 to 80,000, more preferably from 3,000 to 70,000, and particularly preferably from 5,000 to 65,000. In particular, the weight-average molecular weight is preferably 30,000 or more to achieve good mechanical properties.

The weight-average molecular weight of the (meth)acrylic ester copolymer (A) and the weight-average molecular weight of the polyoxyalkylene polymer (a2) are preferably such that the value calculated by the following expression is preferably 0.65 or more.

### Expression: (weight-average molecular weight of copolymer (A))/(weight-average molecular weight of polyoxyalkylene polymer (a2))

If the value calculated by the above expression is 0.65 or more, this means that the average number of the molecules of the polyoxyalkylene polymer (a2) that are introduced per molecule of the (meth)acrylic ester copolymer (A) is large. In this case, the strength of a cured product resulting from curing of the (meth)acrylic ester copolymer (A) can be further increased.

In terms of the strength of the cured product, the value calculated by the above expression is more preferably 0.8 or more, even more preferably 1.0 or more, still even more preferably 1.1 or more, particularly preferably 1.2 or more, and most preferably 1.3 or more. The upper limit of the calculated value is not limited to a particular value, but the calculated value is preferably 10 or less and more preferably 5 or less.

The (meth)acrylic ester copolymer (A) is not limited to having a particular molecular weight distribution. In terms of allowing the (meth)acrylic ester copolymer (A) to have a low viscosity, the dispersity of the (meth)acrylic ester copolymer (A) is preferably from 3.0 to 11.0, more preferably from 3.2 to 10.0, and even more preferably from 3.4 to 8.0. The molecular weight distribution of the (meth)acrylic ester copolymer (A) can be determined from the number-average molecular weight and weight-average molecular weight obtained by GPC analysis.

In a preferred aspect, the (meth)acrylic ester copolymer (A) may include a triblock copolymer. The triblock copolymer includes a structure in which two first molecular chains are bonded to each other via one second molecular chain. Each of the first molecular chains includes a (meth)acrylic ester polymer molecular chain, and the second molecular chain includes a polyoxyalkylene polymer molecular chain.

The first molecular chain is a molecular chain formed by copolymerization of the (meth)acrylic ester (a1), the (meth)acryloyl groups of the polyfunctional macromonomer (a2), the chain transfer agent (a3), the optional monomer (a4), and any other optional monomer. A reactive silicon group is bonded to the first molecular chain. In the case where the chain transfer agent (a3) having a mercapto group has a reactive silicon group, the reactive silicon group is bonded to an end of the first molecular chain. In the case of using the monomer (a4) having a reactive silicon group and a polymerizable unsaturated group, the reactive silicon group is bonded to a non-terminal moiety of the first molecular chain.

The second molecular chain corresponds to a polyoxyalkylene polymer backbone in the polyfunctional macromonomer (a2).

The way in which the two first molecular chains and the one second molecular chain are bonded is different from that in common ABA triblock copolymers. Specifically, both ends of the second molecular chain are bonded to a non-terminal moiety of one of the first molecular chains and a non-terminal moiety of the other first molecular chain, respectively. That is, the triblock copolymer includes an H-shaped structure, in which the two vertical bars of "H" correspond to the two first molecular chains, and the one horizontal bar of "H" corresponds to the one second molecular chain.

The (meth)acrylic ester copolymer (A) is not limited to the triblock copolymer having the H-shaped structure, and may include a block copolymer having another structure in addition to the triblock copolymer having the H-shaped structure. Examples of the block copolymer having a structure other than the H-shaped structure include a block copolymer having a structure in which three first molecular chains are bonded to one another via two second molecular chains.

The first and second molecular chains are bonded via an ester bond derived from the (meth)acryloyl group of the polyfunctional macromonomer (b2) (i.e., an ester bond corresponding to the ester bond in the formula (2) given above).

The (meth)acrylic ester copolymer (A) having the first molecular chain composed of a rigid polymer and the second molecular chain composed of a polyoxyalkylene polymer which is a soft polymer is preferred in that the use of such a copolymer (A) can result in a cured product having high strength and high elongation. The term "rigid polymer" as used herein refers to a polymer having a high glass transition temperature. The term "soft polymer" as used herein refers to a polymer having a low glass transition temperature. Specifically, the monomer component of the first molecular chain (monomer component excluding the polyoxyalkylene polymer (a2)) preferably includes at least one monomer selected from the group consisting of a methacrylic ester, isobomyl acrylate, dicyclopentenyl acrylate, and dicyclopentanyl acrylate. The at least one monomer preferably constitutes 60 wt% or more, more preferably 70 wt% or more, of the total monomer component of the first molecular chain.

The first molecular chain is a molecular chain formed as a result of a reaction of the chain transfer agent (a3) having a mercapto group. Thus, the first molecular chain can have, at one end thereof, a substituent derived from the chain transfer agent (a3), in particular a structure represented by -S-R³. In this formula, S is a sulfur atom and R³ is a hydrocarbon group optionally having a reactive silicon group. Examples of the hydrocarbon group include alkyl, aryl, and aralkyl groups having up to 20 carbon atoms. The reactive silicon group is one represented by the formula (1) described above. Specific examples of R³ include a reactive silicon group-containing methyl group, a reactive silicon group-containing propyl group, a n-dodecyl group, a tert-dodecyl group, and a lauryl group.

As previously stated, the molar ratio of the polyoxyalkylene polymer (a2) to the chain transfer agent (a3) having a mercapto group is 0.06 or more. Accordingly, in the (meth)acrylic ester copolymer (A), the molar ratio of the polyoxyalkylene polymer to the structure represented by -S-R³ is 0.06 or more. If the molar ratio is less than 0.06, the weight-average molecular weight of the (meth)acrylic ester copolymer (A) cannot be high enough, and the strength of the resulting cured product is insufficient. The molar ratio is preferably 0.08 or more, more preferably 0.1 or more, even more preferably 0.12 or more, and particularly preferably 0.15 or more. The upper limit of the molar ratio is not limited to a particular value, but the molar ratio is preferably 1 or less and more preferably 0.5 or less.

### <<Method for Producing (Meth)acrylic Ester Copolymer (A)>>

The (meth)acrylic ester copolymer (A) can be produced by polymerization of the monomer component described above. The polymerization method is not limited to a particular technique and may be commonly used free-radical polymerization. In the present embodiment, even when free-radical polymerization is used, the polymerization can be controlled to produce the (meth)acrylic ester copolymer (A) as a block copolymer. Additionally, the molecular weight distribution of the (meth)acrylic ester copolymer (A) can be made relatively narrow.

Examples of polymerization initiators usable in the free-radical polymerization include: azo compounds such as 2,2'-azobis(2-methylbutyronitrile), dimethyl 2,2'-azobis(2-methylpropionate), 2,2'-azobis(2,4-dimethylvaleronitrile), 2,2'-azobis(4-methoxy-2,4-dimethylvaleronitrile), 2,2'-azobis[A-(2-propenyl)-2-methylpropionamide], and 1,1'-azobis(cyclohexane-1-carbonitrile); diacyl peroxides such as benzoyl peroxide, isobutyryl peroxide, isononanoyl peroxide, decanoyl peroxide, lauroyl peroxide, p-chlorobenzoyl peroxide, and di(3,5,5-trimethylhexanoyl) peroxide; peroxydicarbonates such as diisopropyl perdicarbonate, di-sec-butyl perdicarbonate, di-2-ethylhexyl perdicarbonate, di-1-methylheptyl perdicarbonate, di-3-methoxybutyl perdicarbonate, and dicyclohexyl perdicarbonate; peroxyesters such as tert-butyl perbenzoate, tert-butyl peracetate, tert-butyl per-2-ethylhexanoate, tert-butyl perisobutyrate, tert-butyl perpivalate, tert-butyl diperadipate, and cumyl perneodecanoate; ketone peroxides such as methyl ethyl ketone peroxide and cyclohexanone peroxide; dialkyl peroxides such as di-tert-butyl peroxide, dicumyl peroxide, tert-butyl cumyl peroxide, and 1, 1 -di(tert-hexylperoxy)-3,3,5-trimethylcyclohexane; hydroperoxides such as cumene hydroperoxide and tert-butyl hydroperoxide; and peroxides such as 1,1-di(tert-hexylperoxy)-3,3,5-trimethylcyclohexane. One of these polymerization initiators may be used alone, or two or more thereof may be used in combination.

Examples of solvents usable in the free-radical polymerization include: aromatic solvents such as toluene, xylene, styrene, ethylbenzene, p-dichlorobenzene, di-2-ethylhexyl phthalate, and di-n-butyl phthalate; aliphatic hydrocarbon solvents such as hexane, heptane, octane, cyclohexane, and methylcyclohexane; carboxylic ester compounds such as butyl acetate, n-propyl acetate, and isopropyl acetate; ketone compounds such as methyl isobutyl ketone and methyl ethyl ketone; dialkyl carbonate compounds such as dimethyl carbonate and diethyl carbonate; and alcohol compounds such as n-propanol, 2-propanol, n-butanol, 2-butanol, isobutanol, *tert*-butanol, and amyl alcohol. Among these, the alcohol compounds are preferred in that the use of any of the alcohol compounds leads to a narrow molecular weight distribution. The aromatic solvents are preferred in that they have high dissolving power. The aliphatic hydrocarbon solvents are preferred in that they have a low level of odor. The molecular weight distribution of the (meth)acrylic ester copolymer (A) is influenced by the amount of the chain transfer agent (a3) added and the type of the solvent. In the case where the amount of the chain transfer agent (a3) added is 2 wt% or less, the molecular weight distribution is influenced significantly by the type of the solvent. When the (meth)acrylic ester copolymer (A) having a narrow molecular weight distribution is desired, it is preferable to use isobutanol as a solvent. To obtain a cured product having a high Young's modulus, it is preferable to use an aromatic hydrocarbon solvent.

As previously stated, the use of the monomer (a4) having a reactive silicon group and a polymerizable unsaturated group or the use of the chain transfer agent (a3) having a reactive silicon group in addition to a mercapto group leads to the (meth)acrylic ester copolymer (A) having a reactive silicon group. The use of the monomer (a4) having a reactive silicon group and a polymerizable unsaturated group and the use of the chain transfer agent (a3) having a reactive silicon group in addition to a mercapto group may be combined. With the use of the monomer (a4) having a reactive silicon group and a polymerizable unsaturated group, the reactive silicon group can be randomly introduced in a side chain of a (meth)acrylic ester polymer molecular chain. With the use of the chain transfer agent (a3) having a reactive silicon group in addition to a mercapto group, the reactive silicon group can be introduced at an end of a (meth)acrylic ester polymer molecular chain.

The following methods can also be used to further introduce reactive silicon groups into the (meth)acrylic ester copolymer (A).
(i) A method in which a monomer having a reactive functional group (V group) is copolymerized with the (meth)acrylic ester (a1) etc. and then the resulting copolymer is reacted with a compound having a reactive silicon group and a functional group reactive with the V group. Specific examples of the method (i) include: a method in which 2-hydroxyethyl acrylate is copolymerized and then the resulting copolymer is reacted with an isocyanatosilane compound having a reactive silicon group; and a method in which glycidyl acrylate is copolymerized and then the resulting copolymer is reacted with an aminosilane compound having a reactive silicon group.
(ii) A method in which terminal functional groups of a (meth)acrylic ester copolymer synthesized by living radical polymerization are modified to introduce reactive silicon groups. A (meth)acrylic ester copolymer resulting from living radical polymerization permits easy introduction of functional groups at the polymer ends. The reactive silicon groups can be introduced at the polymer ends by modifying the introduced functional groups.

Examples of compounds that can be used in the method (i) as the compound having a reactive silicon group and a functional group reactive with the V group include: isocyanatosilane compounds such as 3-isocyanatopropyldimethoxymethylsilane, 3-isocyanatopropyltrimethoxysilane, 3-isocyanatopropyltriethoxysilane, isocyanatomethyldimethoxymethylsilane, isocyanatomethyltrimethoxysilane, and isocyanatomethyltriethoxysilane; epoxysilane compounds such as 3-glycidoxypropyldimethoxymethylsilane, 3-glycidoxypropyltrimethoxysilane, 3-glycidoxypropyltriethoxysilane, glycidoxymethyldimethoxymethylsilane, glycidoxymethyltrimethoxysilane, and glycidoxymethyltriethoxysilane; and aminosilane compounds such as 3-aminopropyldimethoxymethylsilane, 3-aminopropyltrimethoxysilane, 3-aminopropyltriethoxysilane, aminomethyldimethoxymethylsilane, aminomethyltrimethoxysilane, aminomethyltriethoxysilane, *N*-cyclohexylaminomethyldimethoxymethylsilane, *N*-cyclohexylaminomethyltrimethoxysilane, and *N*-cyclohexylaminomethyltriethoxysilane.

In the method (ii), any modification reaction can be used. Examples of the modification reaction method include: a method using a compound having a reactive silicon group and a reactive group reactive with the terminal functional groups resulting from living radical polymerization; and a method in which double bonds are introduced at the polymer ends using a compound having a double bond and a reactive group reactive with the terminal functional groups and subsequently reactive silicon groups are introduced by means of a process such as a hydrosilylation reaction.

### <<Curable Composition>>

The present embodiment also relates to a curable composition containing the (meth)acrylic ester copolymer (A). The curable composition may contain only the (meth)acrylic ester copolymer (A) as a reactive silicon group-containing polymer or may contain another reactive silicon group-containing polymer in addition to the (meth)acrylic ester copolymer (A).

### <<Silanol Condensation Catalyst>>

The curable composition according to the present embodiment preferably contains a silanol condensation catalyst in order to accelerate a condensation reaction of the reactive silicon groups of the (meth)acrylic ester copolymer (A) and increase the polymer chain length or induce polymer crosslinking.

Examples of the silanol condensation catalyst include an organotin compound, a metal carboxylate, an amine compound, a carboxylic acid, and an alkoxy metal.

Specific examples of the organotin compound include dibutyltin dilaurate, dibutyltin dioctanoate, dibutyltin bis(butyl maleate), dibutyltin diacetate, dibutyltin oxide, dibutyltin bis(acetylacetonate), a reaction product of dibutyltin oxide and a silicate compound, a reaction product of dibutyltin oxide and a phthalic ester, dioctyltin diacetate, dioctyltin dilaurate, dioctyltin bis(ethyl maleate), dioctyltin bis(octyl maleate), dioctyltin bis(acetylacetonate), dioctyltin distearate, dioctyltin oxide, and a reaction product of dioctyltin oxide and a silicate compound.

Specific examples of the metal carboxylate include tin carboxylate, bismuth carboxylate, titanium carboxylate, zirconium carboxylate, iron carboxylate, potassium carboxylate, and calcium carboxylate. The metal carboxylate may be a combination of any of carboxylic acids mentioned below and any of various metals.

Specific examples of the amine compound include: amines such as octylamine, 2-ethylhexylamine, laurylamine, and stearylamine; nitrogen-containing heterocyclic compounds such as pyridine, 1,8-diazabicyclo[5,4,0]undec-7-ene (DBU), and 1,5-diazabicyclo[4,3,0]non-5-ene (DBN); guanidines such as guanidine, phenylguanidine, and diphenylguanidine; biguanides such as butylbiguanide, 1-(o-tolyl)biguanide, and 1-phenylbiguanide; amino group-containing silane coupling agents; and ketimine compounds.

Specific examples of the carboxylic acid include acetic acid, propionic acid, butyric acid, 2-ethylhexanoic acid, lauric acid, stearic acid, oleic acid, linoleic acid, neodecanoic acid, and versatic acid.

Specific examples of the alkoxy metal include: titanium compounds such as tetrabutyl titanate, titanium tetrakis(acetylacetonate), and diisopropoxytitanium bis(ethyl acetoacetate); aluminum compounds such as aluminum tris(acetylacetonate) and diisopropoxyaluminum ethyl acetoacetate; and zirconium compounds such as zirconium tetrakis(acetylacetonate).

Other silanol condensation catalysts that can be used include fluorine anion-containing compounds, photoacid generators, and photobase generators.

Two or more different silanol condensation catalysts may be used in combination. For example, the combined use of the amine compound and carboxylic acid as mentioned above or of the amine compound and alkoxy metal as mentioned above can provide a reactivity-enhancing effect.

In the case where a silanol condensation catalyst is used, the amount of the silanol condensation catalyst is preferably from 0.001 to 20 parts by weight, more preferably from 0.01 to 15 parts by weight, and particularly preferably from 0.01 to 10 parts by weight per 100 parts by weight of the (meth)acrylic ester copolymer (A).

### <<Additional Components>>

The curable composition according to the present embodiment, which contains the (meth)acrylic ester copolymer (A) and optionally a silanol condensation catalyst, may further contain additional components such as a filler, an adhesion promoter, an anti-sagging agent, an antioxidant, a light stabilizer, an ultraviolet absorber, and another resin. The curable composition according to the present embodiment may, if necessary, contain various additives to adjust the physical properties of the composition or a cured product of the composition. Examples of the additives include a plasticizer, a solvent, a diluent, a photocurable material, an oxygen-curable material, a surface modifier, a silicate, a curability modifier, a radical inhibitor, a metal deactivator, an antiozonant, a phosphorus-based peroxide decomposer, a lubricant, a pigment, a fungicide, a flame retardant, and a blowing agent.

### <Filler>

The curable composition according to the present embodiment can contain a filler. Examples of the filler include ground calcium carbonate, colloidal calcium carbonate, magnesium carbonate, diatomite, clay, talc, titanium oxide, fumed silica, precipitated silica, crystalline silica, molten silica, wet silica, silicic anhydride, hydrated silicic acid, alumina, carbon black, ferric oxide, aluminum fines, zinc oxide, activated zinc oxide, PVC powder, PMMA powder, and glass fibers or filaments.

The amount of the filler used is preferably from 1 to 300 parts by weight and more preferably from 10 to 250 parts by weight per 100 parts by weight of the (meth)acrylic ester copolymer (A).

An organic or inorganic balloon may be added to reduce the weight (or reduce the specific gravity) of the composition.

### <Adhesion Promoter>

The curable composition according to the present embodiment can contain an adhesion promoter. A silane coupling agent or a reaction product of the silane coupling agent can be used as the adhesion promoter.

Specific examples of the silane coupling agent include: amino group-containing silanes such as γ-aminopropyltrimethoxysilane, γ-aminopropylmethyldimethoxysilane, *N*-β-aminoethyl-γ-aminopropyltrimethoxysilane, *N*-β-aminoethyl-γ-aminopropylmethyldimethoxysilane, *N*-phenyl-γ-aminopropyltrimethoxysilane, and (2-aminoethyl)aminomethyltrimethoxysilane; isocyanate group-containing silanes such as γ-isocyanatopropyltrimethoxysilane, γ-isocyanatopropyltriethoxysilane, γ-isocyanatopropylmethyldimethoxysilane, α-isocyanatomethyltrimethoxysilane, and α-isocyanatomethyldimethoxymethylsilane; mercapto group-containing silanes such as γ-mercaptopropyltrimethoxysilane, γ-mercaptopropyltriethoxysilane, and γ-mercaptopropylmethyldimethoxysilane; and epoxy group-containing silanes such as γ-glycidoxypropyltrimethoxysilane and β-(3,4-epoxycyclohexyl)ethyltrimethoxysilane. Condensation products of various silane coupling agents can also be used, and examples of the condensation products include a condensation product of an amino group-containing silane and a product of condensation of an amino group-containing silane with another alkoxysilane. Reaction products of various silane coupling agents can also be used, and examples of the reaction products include a reaction product of an amino group-containing silane and an epoxy group-containing silane and a reaction product of an amino group-containing silane and a (meth)acrylic group-containing silane. One of the above adhesion promoters may be used alone, or two or more there of may be used as a mixture.

The amount of the silane coupling agent used is preferably from 0.1 to 20 parts by weight and more preferably from 0.5 to 10 parts by weight per 100 parts by weight of the (meth)acrylic ester copolymer (A).

### <Plasticizer>

A plasticizer can be added to the curable composition according to the present embodiment. Specific examples of the plasticizer include: phthalic ester compounds such as dibutyl phthalate, diisononyl phthalate (DINP), diheptyl phthalate, di(2-ethylhexyl) phthalate, diisodecyl phthalate (DIDP), and butyl benzyl phthalate; terephthalic ester compounds such as bis(2-ethylhexyl)-1,4-benzenedicarboxylate; non-phthalic ester compounds such as diisononyl 1,2-cyclohexanedicarboxylate; aliphatic polyfunctional carboxylic ester compounds such as dioctyl adipate, dioctyl sebacate, dibutyl sebacate, diisodecyl succinate, and tributyl acetylcitrate; unsaturated fatty acid ester compounds such as butyl oleate and methyl acetyl ricinoleate; alkylsulfonic acid phenyl esters; phosphoric ester compounds; trimellitic ester compounds; chlorinated paraffin; hydrocarbon oils such as alkyl diphenyl and partially-hydrogenated terphenyl; process oil; and epoxy plasticizers such as epoxidized soybean oil and benzyl epoxystearate.

A polymeric plasticizer can also be used. Specific examples of the polymeric plasticizer include: vinyl polymers; polyester plasticizers; polyethers such as polyether polyols (e.g., polyethylene glycol and polypropylene glycol having a number-average molecular weight of 500 or more) and derivatives resulting from conversion of the hydroxy groups of the polyether polyols to ester or ether groups; polystyrenes; polybutadiene; polybutene; polyisobutylene; butadiene-acrylonitrile; and polychloroprene. One plasticizer may be used alone, or two or more plasticizers may be used in combination.

The amount of the plasticizer used is preferably from 5 to 150 parts by weight, more preferably from 10 to 120 parts by weight, and even more preferably from 20 to 100 parts by weight per 100 parts by weight of the (meth)acrylic ester copolymer (A).

### <Solvent and Diluent>

A solvent or diluent can be added to the curable composition according to the present embodiment. The solvent or diluent used is not limited to a particular compound, and may be an aliphatic hydrocarbon, an aromatic hydrocarbon, an alicyclic hydrocarbon, a halogenated hydrocarbon, an alcohol, an ester, a ketone, or an ether. When a solvent or diluent is used, the boiling point of the solvent or diluent is preferably 150°C or higher, more preferably 200°C or higher, and particularly preferably 250°C or higher to avoid air pollution during indoor use of the composition. One of the solvents or diluents as mentioned above may be used alone, or two or more thereof may be used in combination.

### <Anti-Sagging Agent>

The curable composition according to the present embodiment may, if necessary, contain an anti-sagging agent to prevent sagging and improve workability. Examples of the anti-sagging agent include, but are not limited to, polyamide waxes, hydrogenated castor oil derivatives, and metallic soaps such as calcium stearate, aluminum stearate, and barium stearate. One of these anti-sagging agents may be used alone, or two or more thereof may be used in combination.

The amount of the anti-sagging agent used is preferably from 0.1 to 20 parts by weight per 100 parts by weight of the (meth)acrylic ester copolymer (A).

### <Antioxidant>

The curable composition according to the present embodiment can contain an antioxidant (anti-aging agent). The use of an antioxidant can increase the weathering resistance of the cured product. Examples of the antioxidant include hindered phenol antioxidants, monophenol antioxidants, bisphenol antioxidants, and polyphenol antioxidants. Specific examples of the antioxidant are mentioned in Japanese Laid-Open Patent Application Publication No. H4-283259 and Japanese Laid-Open Patent Application Publication No. H9-194731.

The amount of the antioxidant used is preferably from 0.1 to 10 parts by weight and more preferably from 0.2 to 5 parts by weight per 100 parts by weight of the (meth)acrylic ester copolymer (A).

### <Light Stabilizer>

The curable composition according to the present embodiment can contain a light stabilizer. The use of a light stabilizer can prevent photooxidative degradation of the cured product. Examples of the light stabilizer include benzotriazole, hindered amine, and benzoate compounds. Particularly preferred are hindered amine compounds.

The amount of the light stabilizer used is preferably from 0.1 to 10 parts by weight and more preferably from 0.2 to 5 parts by weight per 100 parts by weight of the (meth)acrylic ester copolymer (A).

### <Ultraviolet Absorber>

The curable composition according to the present embodiment can contain an ultraviolet absorber. The use of an ultraviolet absorber can increase the surface weathering resistance of the cured product. Examples of the ultraviolet absorber include benzophenone, benzotriazole, salicylate, substituted acrylonitrile, and metal chelate compounds. Particularly preferred are benzotriazole compounds. Specific examples of the ultraviolet absorber include those sold under the trade names Tinuvin P, Tinuvin 213, Tinuvin 234, Tinuvin 326, Tinuvin 327, Tinuvin 328, Tinuvin 329, and Tinuvin 571 (all of these are manufactured by BASF).

The amount of the ultraviolet absorber used is preferably from 0.1 to 10 parts by weight and more preferably from 0.2 to 5 parts by weight per 100 parts by weight of the (meth)acrylic ester copolymer (A).

### <Property Modifier>

A property modifier may be added, if necessary, to the curable composition according to the present embodiment for the purpose of modifying the tensile properties of the resulting cured product. Examples of the property modifier include, but are not limited to: alkylalkoxysilanes such as phenoxytrimethylsilane, methyltrimethoxysilane, dimethyldimethoxysilane, trimethylmethoxysilanc, and n-propyltrimethoxysilane; arylalkoxysilanes such as diphenyldimethoxysilane and phenyltrimethoxysilane; alkylisopropenoxysilanes such as dimethyldiisopropenoxysilane, methyltriisopropenoxysilane, and γ-glycidoxypropylmethyldiisopropenoxysilane; trialkylsilyl borates such as tris(trimethylsilyl) borate and tris(triethylsilyl) borate; silicone varnishes; and polysiloxanes. The use of the property modifier can increase the hardness of the cured product of the curable composition according to the present embodiment or conversely decrease the hardness and increase the elongation at break. One of the property modifiers as mentioned above may be used alone, or two or more thereof may be used in combination.

In particular, a compound hydrolyzable to form a compound having a monovalent silanol group in the molecule has the advantage of decreasing the modulus of the cured product without aggravating the stickiness of the surface of the cured product. Particularly preferred is a compound the hydrolysis of which gives trimethylsilanol. Examples of the compound hydrolyzable to form a compound having a monovalent silanol group in the molecule include silicon compounds which are derivatives of alcohols such as hexanol, octanol, phenol, trimethylolpropane, glycerin, pentaerythritol, and sorbitol and the hydrolysis of which gives monosilanols. Specific examples include phenoxytrimethylsilane and tris((trimethylsiloxy)methyl)propane.

The amount of the property modifier used is preferably from 0.1 to 10 parts by weight and more preferably from 0.5 to 5 parts by weight per 100 parts by weight of the (meth)acrylic ester copolymer (A).

### <Tackifying Resin>

A tackifying resin can be added, if necessary, to the curable composition according to the present embodiment for the purpose of increasing the adhesion or cohesion to a substrate or any other purpose. The tackifying resin used is not limited to a particular resin, and may be a commonly used tackifying resin.

Specific examples of the tackifying resin include terpene resins, aromatic modified terpene resins, hydrogenated terpene resins, terpene-phenol resins, phenol resins, modified phenol resins, xylene-phenol resins, cyclopentadiene-phenol resins, coumarone-indene resins, rosin resins, rosin ester resins, hydrogenated rosin ester resins, xylene resins, low-molecular-weight polystyrene resins, styrene copolymer resins, styrene block copolymers, hydrogenated styrene block copolymers, petroleum resins (such as C5 hydrocarbon resins, C9 hydrocarbon resins, and C5-C9 hydrocarbon copolymer resins), hydrogenated petroleum resins, and DCPD resins. One of these resins may be used alone, or two or more thereof may be used in combination.

The amount of the tackifying resin used is preferably from 2 to 100 parts by weight, more preferably from 5 to 50 parts by weight, and even more preferably from 5 to 30 parts by weight per 100 parts by weight of the (meth)acrylic ester copolymer (A).

### <Epoxy Group-Containing Compound>

An epoxy group-containing compound can be used in the curable composition according to the present embodiment. The use of an epoxy group-containing compound can improve the recovery performance of the cured product. Examples of the epoxy group-containing compound include epoxidized unsaturated fats and oils, epoxidized unsaturated fatty acid esters, alicyclic epoxy compounds, epichlorohydrin derivatives, and mixtures of the derivatives. Specific examples include epoxidized soybean oil, epoxidized linseed oil, bis(2-ethylhexyl)-4,5-epoxycyclohexane-1,2-dicarboxylate (E-PS), epoxy octyl stearate, and epoxy butyl stearate. It is recommended to use the epoxy compound in an amount of 0.5 to 50 parts by weight per 100 parts by weight of the (meth)acrylic ester copolymer (A).

### <Photocurable Material>

A photocurable material can be used in the curable composition according to the present embodiment. The use of a photocurable material can lead to the formation of a coating of the photocurable material on the surface of the cured product, resulting in reduction in stickiness of the cured product or increase in weathering resistance of the cured product. A wide variety of such compounds are known, including organic monomers, oligomers, resins, and compositions containing them. Typical examples of photocurable materials that can be used include: an unsaturated acrylic compound which is a monomer or an oligomer having one or more unsaturated acrylic or methacrylic groups or a mixture of the monomer and oligomer; polyvinyl cinnamates; and azide resins.

The amount of the photocurable material used is preferably from 0.1 to 20 parts by weight and more preferably from 0.5 to 10 parts by weight per 100 parts by weight of the (meth)acrylic ester copolymer (A).

### <Oxygen-Curable Material>

An oxygen-curable material can be used in the curable composition according to the present embodiment. Examples of the oxygen-curable material include unsaturated compounds reactive with oxygen in the air. The oxygen-curable material reacts with oxygen in the air to form a cured coating in the vicinity of the surface of the cured product, thus offering benefits such as preventing the surface of the cured product from being sticky and preventing deposition of dirt and dust on the surface of the cured product. Specific examples of the oxygen-curable material include: drying oils exemplified by tung oil and linseed oil; various alkyd resins obtained by modification of the drying oil compounds; drying oil-modified acrylic polymers, epoxy resins, and silicone resins; and liquid polymers such as 1,2-polybutadiene, 1,4-polybutadiene, and C5 to C8 diene polymers which are obtained by polymerization or copolymerization of diene compounds such as butadiene, chloroprene, isoprene, and 1,3-pentadiene. One of these materials may be used alone, or two or more thereof may be used in combination.

The amount of the oxygen-curable material used is preferably from 0.1 to 20 parts by weight and more preferably from 0.5 to 10 parts by weight per 100 parts by weight of the (meth)acrylic ester copolymer (A). As taught in Japanese Laid-Open Patent Application Publication No. H3-160053, it is recommended to use the oxygen-curable material in combination with a photocurable material.

### <Epoxy Resin>

An epoxy resin can also be used in the curable composition according to the present embodiment. The composition containing an added epoxy resin is preferred especially for use as an adhesive, in particular an adhesive for exterior wall tiles. Examples of the epoxy resin include bisphenol A epoxy resins and novolac epoxy resins.

As to the ratio between the epoxy resin used and the (meth)acrylic ester copolymer (A), the (meth)acrylic ester copolymer (A)/epoxy resin weight ratio is preferably from 100/1 to 1/100. If the (meth)acrylic ester copolymer (A)/epoxy resin weight ratio is below 1/100, the enhancing effect on the impact resistance and toughness of the epoxy resin cured product will be diminished. If the (meth)acrylic ester copolymer (A)/epoxy resin weight ratio is above 100/1, the strength of the polymer cured product will be insufficient.

When the epoxy resin is added to the curable composition according to the present embodiment, a curing agent for curing the epoxy resin can also be used in the curable composition. The epoxy resin-curing agent used is not limited to a particular material, and may be a commonly used epoxy resin-curing agent.

When a curing agent for curing the epoxy resin is used, the amount of the curing agent is preferably from 0.1 to 300 parts by weight per 100 parts by weight of the epoxy resin.

The curable composition according to the present embodiment is preferably prepared as a one-part composition all the components of which are blended together and hermetically stored and which, when applied to any object, cures under the action of moisture in the air.

In the case where the curable composition is a one-part composition, all the components are blended together beforehand. Thus, it is preferable that a water-containing component be dried to remove water before use or dehydrated by means such as pressure reduction during blending or kneading.

A suitable drying/dehydrating method used when the water-containing component is a solid such as powder is thermal drying, and a suitable drying/dehydrating method used when the water-containing component is a liquid is dehydration under reduced pressure or dehydration using synthetic zeolite, activated alumina, silica gel, quicklime, or magnesium oxide. Alternatively, a small amount of isocyanate compound may be added to react the isocyanate group with water and thus accomplish dehydration. An oxazolidine compound such as 3-ethyl-2-methyl-2-(3-methylbutyl)-1,3-oxazolidine may be added to react the oxazolidine compound with water and thus accomplish dehydration.

The storage stability of the curable composition can be further improved by not only performing the drying/dehydration as described above but also adding a lower alcohol such as methanol or ethanol or an alkoxysilane compound. Examples of the alkoxysilane compound include methyltrimethoxysilane, phenyltrimethoxysilane, n-propyltrimethoxysilane, vinyltrimethoxysilane, vinylmethyldimethoxysilane, γ-mercaptopropylmethyldimethoxysilane, γ-mercaptopropylmethyldiethoxysilane, and γ-glycidoxypropyltrimethoxysilane.

The amount of the dehydrating agent used, in particular the alkoxysilane compound, is preferably from 0.1 to 20 parts by weight and more preferably from 0.5 to 10 parts by weight per 100 parts by weight of the (meth)acrylic ester copolymer (A).

The method for preparing the curable composition according to the present embodiment is not limited to a particular technique. For example, a common method can be employed in which the components described above are mixed and the mixture is kneaded using a mixer, a roll mill, or a kneader at ordinary temperature or under heating or in which the components are dissolved and mixed using a small amount of suitable solvent.

The curable composition according to the present embodiment can be used, for example, as a sealing material for buildings, ships, automobiles, or roads, an adhesive, a mold making material, a vibration-isolating material, a vibration-damping material, a soundproofing material, a foam material, a paint, a spray material, or a waterproofing coating material.

A cured product obtained by curing the curable composition according to the present embodiment has high adhesion to various kinds of adherends. As such, the curable composition is more preferably used as a sealing material or an adhesive.

The curable composition according to the present embodiment can be used in diverse applications, including: a material for use in an electrical or electronic part, such as a sealant for the back side of a solar cell; an electrical insulating material such as an insulating sheath material for an electric wire or a cable; an elastic adhesive; a contact adhesive; a spray-type sealing material; a crack-repairing material; an adhesive for tile laying; a powder paint; a cast molding material; a rubber material for medical purposes; a pressure-sensitive adhesive for medical purposes; a medical device sealing material; a food packaging material; a joint sealing material for exterior cladding such as siding board; a coating material; a primer; an electrically conductive material for electromagnetic wave shielding; a thermally conductive material; a hot-melt material; a potting agent for electrical or electronic purposes; a film; a gasket; any kind of molding material; a rust-proofing or waterproofing sealant for an edge face (cut edge) of wire glass or laminated glass; and a liquid sealing material used for various kinds of parts such as automobile parts, electrical parts, and machinery parts.

A cured product of the curable composition according to the present embodiment can, alone or in combination with a primer, adhere to a wide variety of substrates such as glass, porcelain, wood, metal, and a resin molded article. Thus, the curable composition can be used also as a sealing composition or an adhesive composition.

The curable composition according to the present embodiment can be used also as an adhesive for interior panels, an adhesive for exterior panels, an adhesive for tile laying, an adhesive for stone laying, an adhesive for ceiling finishing, an adhesive for floor finishing, an adhesive for wall finishing, an adhesive for vehicle panels, an adhesive for assembly of electrical, electronic, or precision equipment, a sealing material for direct glazing, a sealing material for double-glazed glass, a sealing material for SSG, or a sealing material for working joints of buildings.

### Examples

Hereinafter, the present invention will be described in more detail using examples. The examples given below are not intended to limit the present invention.

### (Number-Average Molecular Weight and Weight-Average Molecular Weight)

The number-average and weight-average molecular weights mentioned in the examples are GPC molecular weights measured under the following conditions.
Delivery system: HLC-8220 GPC manufactured by Tosoh Corporation
Column: TSK-GEL H type manufactured by Tosoh Corporation
Solvent: THF
Molecular weight: Polystyrene equivalent
Measurement temperature: 40°C

### (Sulfur Atom Concentration)

Each of the values of the sulfur atom concentration is a theoretical value calculated from the total amount of the monomer component used to produce the (meth)acrylic ester copolymer (A) and the amount of the chain transfer agent (a3) having a mercapto group.

### (Synthesis Example 1)

To polyoxypropylene glycol having a number-average molecular weight of about 4,020 (terminal group equivalent molecular weight of 2,980) was added 60 ppm of U-360 (dibutyltin bis(isooctyl mercaptopropionate), Nitto Kasei Co., Ltd.), and 0.93 equivalents of Karenz AOI (2-isocyanatoethyl acrylate, Showa Denko K.K.) was added dropwise per equivalent of the hydroxy groups of the polyoxypropylene glycol. The reaction was allowed to proceed in a nitrogen atmosphere containing 5.5% oxygen at 80°C for 1 hour, thus giving a polyoxyalkylene polymer (a2-1) terminated at both ends by acryloyl groups (having about two acryloyl groups per polymer molecule) and having a number-average molecular weight of 4,020 and a weight-average molecular weight of 4,860.

### (Synthesis Example 2)

Propylene oxide was polymerized using polyoxypropylene glycol having a number-average molecular weight of about 4,020 (terminal group equivalent molecular weight of 2,980) as an initiator in the presence of a zinc hexacyanocobaltate-glyme complex catalyst. This polymerization yielded polyoxypropylene terminated at both ends by hydroxy groups and having a number-average molecular weight of 21,100 (terminal group equivalent molecular weight of 13,600) and a dispersity Mw/Mn of 1.21. To the polyoxypropylene was added 60 ppm of U-360, and 0.93 equivalents of Karenz AOI was added dropwise per equivalent of the hydroxy groups of the polyoxypropylene. The reaction was allowed to proceed in a nitrogen atmosphere containing 5.5% oxygen at 80°C for 1 hour, thus giving a polyoxyalkylene polymer (a2-2) terminated at both ends by acryloyl groups (having about two acryloyl groups per polymer molecule) and having a number-average molecular weight of 21,100 and a weight-average molecular weight of 24,930.

### (Synthesis Example 3)

Propylene oxide was polymerized using polyoxypropylene glycol having a number-average molecular weight of about 4,020 (terminal group equivalent molecular weight of 2,980) as an initiator in the presence of a zinc hexacyanocobaltate-glyme complex catalyst. This polymerization yielded polyoxypropylene terminated at both ends by hydroxy groups and having a number-average molecular weight of 28,340 (terminal group equivalent molecular weight of 17,700) and a dispersity Mw/Mn of 1.24. To the polyoxypropylene was added 60 ppm of U-360, and 0.93 equivalents of Karenz AOI was added dropwise per equivalent of the hydroxy groups of the polyoxypropylene. The reaction was allowed to proceed in a nitrogen atmosphere containing 5.5% oxygen at 80°C for 1 hour, thus giving a polyoxyalkylene polymer (a2-3) terminated at both ends by acryloyl groups (having about two acryloyl groups per polymer molecule) and having a number-average molecular weight of 28,340 and a weight-average molecular weight of 35,170.

### (Synthesis Example 4)

Sodium methoxide dissolved in methanol at a concentration of 28% was added to polyoxypropylene glycol having a number-average molecular weight of about 4,020 (terminal group equivalent molecular weight of 2,980). The amount of sodium methoxide was 1.2 molar equivalents per molar equivalent of the hydroxy groups of the polyoxypropylene glycol. After methanol was distilled off by evaporation under vacuum, 1.79 molar equivalents of allyl chloride was added per molar equivalent of the hydroxy groups of the polyoxypropylene glycol to convert the terminal hydroxy groups to allyl groups. To 100 parts by weight of the unpurified, ally-terminated polyoxypropylene were added 300 parts by weight of n-hexane and 300 parts by weight of water, and the mixture was stirred and then centrifuged to remove water. To the resulting hexane solution was added 300 parts by weight of water, and the mixture was stirred and then centrifuged to remove water. Hexane was subsequently removed by evaporation under reduced pressure. Thus, a polyoxyalkylene polymer (p-1) terminated by allyl groups and having a number-average molecular weight of 4,020 and a weight-average molecular weight of 4,860 was obtained.

### (Synthesis Example 5)

A four-necked flask equipped with a stirrer was charged with 41.7 parts by weight of isobutanol, which was heated to 105°C under nitrogen atmosphere. To the heated isobutanol was added dropwise over 5 hours a liquid mixture prepared by dissolving 59.7 parts by weight of butyl acrylate, 10.1 parts by weight of stearyl methacrylate, 21.9 parts by weight of the polyfunctional macromonomer (a2-1) prepared in Synthesis Example 1, 1.0 parts by weight of 3-methacryloxypropyltrimethoxysilane, 7.3 parts by weight of 3-mercaptopropyltrimethoxysilane, and 1.8 parts by weight of 2,2'-azobis(2-methylbutyronitrile) in 20.9 parts by weight of isobutanol. A liquid mixture prepared by dissolving 0.7 parts by weight of 2,2'-azobis(2-methylbutyronitrile) in 8.1 parts by weight of isobutanol was further added, and the polymerization was allowed to proceed at 105°C for 2 hours to give an isobutanol solution (solid content = 60%) of a reactive silicon group-containing (meth)acrylic ester copolymer (A-1) having a number-average molecular weight of 2,470 (GPC molecular weight). For the solids in the solution, the polyfunctional macromonomer amount was 0.070 mmol/g, the reactive silicon group amount was 0.42 mmol/g, and the sulfur atom concentration was 10,941 ppm.

### (Synthesis Example 6)

A four-necked flask equipped with a stirrer was charged with 78.4 parts by weight of isobutanol, which was heated to 105°C under nitrogen atmosphere. To the heated isobutanol was added dropwise over 5 hours a liquid mixture prepared by dissolving 41.0 parts by weight of butyl acrylate, 7.0 parts by weight of stearyl methacrylate, 44.4 parts by weight of the polyfunctional macromonomer (a2-1) prepared in Synthesis Example 1, 0.7 parts by weight of 3-methacryloxypropyltrimethoxysilane, 6.9 parts by weight of 3-mercaptopropyltrimethoxysilane, and 1.8 parts by weight of 2,2'-azobis(2-methylbutyronitrile) in 20.9 parts by weight of isobutanol. A liquid mixture prepared by dissolving 0.7 parts by weight of 2,2'-azobis(2-methylbutyronitrile) in 8.1 parts by weight of isobutanol was further added, and the polymerization was allowed to proceed at 105°C for 2 hours to give an isobutanol solution (solid content = 60%) of a reactive silicon group-containing (meth)acrylic ester copolymer (A-2) having a number-average molecular weight of 3,000 (GPC molecular weight). For the solids in the solution, the polyfunctional macromonomer amount was 0.12 mmol/g, the reactive silicon group amount was 0.34 mmol/g, and the sulfur atom concentration was 10,291 ppm.

### (Synthesis Example 7)

A four-necked flask equipped with a stirrer was charged with 58.9 parts by weight of isobutanol, which was heated to 105°C under nitrogen atmosphere. To the heated isobutanol was added dropwise over 5 hours a liquid mixture prepared by dissolving 47.4 parts by weight of butyl acrylate, 8.0 parts by weight of stearyl methacrylate, 33.3 parts by weight of the polyfunctional macromonomer (a2-1) prepared in Synthesis Example 1, 0.8 parts by weight of 3-methacryloxypropyltrimethoxysilane, 10.5 parts by weight of 3-mercaptopropyltrimethoxysilane, and 1.8 parts by weight of 2,2'-azobis(2-methylbutyronitrile) in 20.9 parts by weight of isobutanol. A liquid mixture prepared by dissolving 0.7 parts by weight of 2,2'-azobis(2-methylbutyronitrile) in 8.1 parts by weight of isobutanol was further added, and the polymerization was allowed to proceed at 105°C for 2 hours to give an isobutanol solution (solid content = 60%) of a reactive silicon group-containing (meth)acrylic ester copolymer (A-3) having a number-average molecular weight of 1,910 (GPC molecular weight). For the solids in the solution, the polyfunctional macromonomer amount was 0.094 mmol/g, the reactive silicon group amount was 0.53 mmol/g, and the sulfur atom concentration was 15,961 ppm.

### (Synthesis Example 8)

A four-necked flask equipped with a stirrer was charged with 46.4 parts by weight of isobutanol, which was heated to 105°C under nitrogen atmosphere. To the heated isobutanol was added dropwise over 5 hours a liquid mixture prepared by dissolving 46.0 parts by weight of methyl methacrylate, 11.2 parts by weight of butyl acrylate, 7.6 parts by weight of stearyl methacrylate, 32.9 parts by weight of the polyfunctional macromonomer (a2-2) prepared in Synthesis Example 2, 1.0 parts by weight of 3-methacryloxypropyltrimethoxysilane, 1.3 parts by weight of 3-mercaptopropyltrimethoxysilane, and 0.3 parts by weight of 2,2'-azobis(2-methylbutyronitrile) in 10.7 parts by weight of isobutanol. A liquid mixture prepared by dissolving 0.3 parts by weight of 2,2'-azobis(2-methylbutyronitrile) in 8.5 parts by weight of isobutanol was further added, and the polymerization was allowed to proceed at 105°C for 2 hours to give an isobutanol solution (solid content = 60%) of a reactive silicon group-containing (meth)acrylic ester copolymer (A-4) having a number-average molecular weight of 7,410 (GPC molecular weight). For the solids in the solution, the polyfunctional macromonomer amount was 0.016 mmol/g, the reactive silicon group amount was 0.11 mmol/g, and the sulfur atom concentration was 2,149 ppm.

### (Synthesis Example 9)

A four-necked flask equipped with a stirrer was charged with 44.0 parts by weight of isobutanol, which was heated to 105°C under nitrogen atmosphere. To the heated isobutanol was added dropwise over 5 hours a liquid mixture prepared by dissolving 51.4 parts by weight of methyl methacrylate, 12.5 parts by weight of butyl acrylate, 8.5 parts by weight of stearyl methacrylate, 25.0 parts by weight of the polyfunctional macromonomer (a2-2) prepared in Synthesis Example 2, 1.1 parts by weight of 3-methacryloxypropyltrimethoxysilane, 1.5 parts by weight of 3-mercaptopropyltrimethoxysilane, and 0.4 parts by weight of 2,2'-azobis(2-methylbutyronitrile) in 11.9 parts by weight of isobutanol. A liquid mixture prepared by dissolving 0.3 parts by weight of 2,2'-azobis(2-methylbutyronitrile) in 9.5 parts by weight of isobutanol was further added, and the polymerization was allowed to proceed at 105°C for 2 hours to give an isobutanol solution (solid content = 60%) of a reactive silicon group-containing (meth)acrylic ester copolymer (A-5) having a number-average molecular weight of 8,120 (GPC molecular weight). For the solids in the solution, the polyfunctional macromonomer amount was 0.012 mmol/g, the reactive silicon group amount was 0.12 mmol/g, and the sulfur atom concentration was 2,402 ppm.

### (Synthesis Example 10)

A four-necked flask equipped with a stirrer was charged with 44.0 parts by weight of isobutanol, which was heated to 105°C under nitrogen atmosphere. To the heated isobutanol was added dropwise over 5 hours a liquid mixture prepared by dissolving 51.5 parts by weight of methyl methacrylate, 13.5 parts by weight of butyl acrylate, 8.5 parts by weight of stearyl methacrylate, 25.0 parts by weight of the polyfunctional macromonomer (a2-2) prepared in Synthesis Example 2, 1.5 parts by weight of 3-mercaptopropyltrimethoxysilane, and 0.4 parts by weight of 2,2'-azobis(2-methylbutyronitrile) in 11.9 parts by weight of isobutanol. A liquid mixture prepared by dissolving 0.3 parts by weight of 2,2'-azobis(2-methylbutyronitrile) in 9.5 parts by weight of isobutanol was further added, and the polymerization was allowed to proceed at 105°C for 2 hours to give an isobutanol solution (solid content = 60%) of a reactive silicon group-containing (meth)acrylic ester copolymer (A-6) having a number-average molecular weight of 7,930 (GPC molecular weight). For the solids in the solution, the polyfunctional macromonomer amount was 0.012 mmol/g, the reactive silicon group amount was 0.075 mmol/g, and the sulfur atom concentration was 2,401 ppm.

### (Synthesis Example 11)

A four-necked flask equipped with a stirrer was charged with 44.2 parts by weight of isobutanol, which was heated to 105°C under nitrogen atmosphere. To the heated isobutanol was added dropwise over 5 hours a liquid mixture prepared by dissolving 50.9 parts by weight of methyl methacrylate, 12.3 parts by weight of butyl acrylate, 8.4 parts by weight of stearyl methacrylate, 24.7 parts by weight of the polyfunctional macromonomer (a2-2) prepared in Synthesis Example 2, 2.2 parts by weight of 3-methacryloxypropyltrimethoxysilane, 1.5 parts by weight of n-dodecyl mercaptan, and 0.4 parts by weight of 2,2'-azobis(2-methylbutyronitrile) in 11.8 parts by weight of isobutanol. A liquid mixture prepared by dissolving 0.3 parts by weight of 2,2'-azobis(2-methylbutyronitrile) in 9.4 parts by weight of isobutanol was further added, and the polymerization was allowed to proceed at 105°C for 2 hours to give an isobutanol solution (solid content = 60%) of a reactive silicon group-containing (meth)acrylic ester copolymer (A-7) having a number-average molecular weight of 7,610 (GPC molecular weight). For the solids in the solution, the polyfunctional macromonomer amount was 0.012 mmol/g, the reactive silicon group amount was 0.088 mmol/g, and the sulfur atom concentration was 2,417 ppm.

### (Synthesis Example 12)

A four-necked flask equipped with a stirrer was charged with 25.6 parts by weight of SOLVESSO 100 (manufactured by Andoh Parachemie Co., Ltd.) and 25.6 parts by weight of mineral spirits (manufactured by Daishin Chemical, Co., Ltd.), which were heated to 110°C under nitrogen atmosphere. To the heated mixture was added dropwise over 5 hours a liquid mixture prepared by dissolving 55.1 parts by weight of methyl methacrylate, 8.8 parts by weight of butyl acrylate, 8.1 parts by weight of stearyl methacrylate, 25.0 parts by weight of the polyfunctional macromonomer (a2-3) prepared in Synthesis Example 3, 1.5 parts by weight of 3-methacryloxypropyltrimethoxysilane, 1.5 parts by weight of 3-mercaptopropyltrimethoxysilane, and 0.4 parts by weight of 2,2'-azobis(2-methylbutyronitrile) in 8.8 parts by weight of SOLVESSO 100. A liquid mixture prepared by dissolving 0.2 parts by weight of 2,2'-azobis(2-methylbutyronitrile) in 5.3 parts by weight of SOLVESSO 100 was further added, and the polymerization was allowed to proceed at 110°C for 2 hours to give a solution (solid content = 60%) of a reactive silicon group-containing (meth)acrylic ester copolymer (A-8) having a number-average molecular weight of 4,860 (GPC molecular weight). For the solids in the solution, the polyfunctional macromonomer amount was 0.0092 mmol/g, the reactive silicon group amount was 0.14 mmol/g, and the sulfur atom concentration was 2,396 ppm.

### (Synthesis Example 13)

A four-necked flask equipped with a stirrer was charged with 25.6 parts by weight of SOLVESSO 100 (manufactured by Andoh Parachemie Co., Ltd.) and 25.6 parts by weight of mineral spirits (manufactured by Daishin Chemical, Co., Ltd.), which were heated to 110°C under nitrogen atmosphere. To the heated mixture was added dropwise over 5 hours a liquid mixture prepared by dissolving 54.6 parts by weight of methyl methacrylate, 8.7 parts by weight of butyl acrylate, 8.0 parts by weight of stearyl methacrylate, 24.8 parts by weight of the polyfunctional macromonomer (a2-3) prepared in Synthesis Example 3, 1.5 parts by weight of 3-methacryloxypropyltrimethoxysilane, 2.4 parts by weight of 3-mercaptopropyltrimethoxysilane, and 0.4 parts by weight of 2,2'-azobis(2-methylbutyronitrile) in 8.8 parts by weight of SOLVESSO 100. A liquid mixture prepared by dissolving 0.2 parts by weight of 2,2'-azobis(2-methylbutyronitrile) in 5.3 parts by weight of SOLVESSO 100 was further added, and the polymerization was allowed to proceed at 1 10°C for 2 hours to give a solution (solid content = 60%) of a reactive silicon group-containing (meth)acrylic ester copolymer (A-9) having a number-average molecular weight of 5,360 (GPC molecular weight). For the solids in the solution, the polyfunctional macromonomer amount was 0.0091 mmol/g, the reactive silicon group amount was 0.18 mmol/g, and the sulfur atom concentration was 3,912 ppm.

### (Synthesis Example 14)

A four-necked flask equipped with a stirrer was charged with 36.9 parts by weight of isobutanol, which was heated to 105°C under nitrogen atmosphere. To the heated isobutanol was added dropwise over 5 hours a liquid mixture prepared by dissolving 63.1 parts by weight of butyl acrylate, 12.6 parts by weight of stearyl methacrylate, 23.1 parts by weight of the polyfunctional macromonomer (a2-1) prepared in Synthesis Example 1, 1.2 parts by weight of 3-methacryloxypropyltrimethoxysilane, and 1.8 parts by weight of 2,2'-azobis(2-methylbutyronitrile) in 20.9 parts by weight of isobutanol. Gelation occurred during the reaction, resulting in a failure to obtain a polymer solution. This Synthesis Example 14 is listed as Comparative Example 1 in Table 1.

### (Synthesis Example 15)

A four-necked flask equipped with a stirrer was charged with 38.1 parts by weight of isobutanol, which was heated to 105°C under nitrogen atmosphere. To the heated isobutanol was added dropwise over 5 hours a liquid mixture prepared by dissolving 87.4 parts by weight of butyl acrylate, 9.8 parts by weight of stearyl methacrylate, 1.0 parts by weight of 3-methacryloxypropyltrimethoxysilane, 1.8 parts by weight of 3-mercaptopropyltrimethoxysilane, and 1.8 parts by weight of 2,2'-azobis(2-methylbutyronitrile) in 20.9 parts by weight of isobutanol. A liquid mixture prepared by dissolving 0.7 parts by weight of 2,2'-azobis(2-methylbutyronitrile) in 8.1 parts by weight of isobutanol was further added, and the polymerization was allowed to proceed at 105°C for 2 hours to give an isobutanol solution (solid content = 60%) of a reactive silicon group-containing (meth)acrylic ester copolymer (P-2) having a number-average molecular weight of 3,730 (GPC molecular weight). For the solids in the solution, the reactive silicon group amount was 0.13 mmol/g, and the sulfur atom concentration was 2,939 ppm.

### (Synthesis Example 16)

A four-necked flask equipped with a stirrer was charged with 41.7 parts by weight of isobutanol, which was heated to 105°C under nitrogen atmosphere. To the heated isobutanol was added dropwise over 5 hours a liquid mixture prepared by dissolving 49.7 parts by weight of butyl acrylate, 10.0 parts by weight of stearyl methacrylate, 23.1 parts by weight of the allyl-terminated polyoxyalkylene polymer (p-1) prepared in Synthesis Example 4, 10.0 parts by weight of 3-methacryloxypropyltrimethoxysilane, 7.2 parts by weight of 3-mercaptopropyltrimethoxysilane, and 1.8 parts by weight of 2,2'-azobis(2-methylbutyronitrile) in 20.9 parts by weight of isobutanol. A liquid mixture prepared by dissolving 0.7 parts by weight of 2,2'-azobis(2-methylbutyronitrile) in 8.1 parts by weight of isobutanol was further added, and the polymerization was allowed to proceed at 105°C for 2 hours to give an isobutanol solution (solid content = 60%) of a reactive silicon group-containing (meth)acrylic ester copolymer (P-3) having a number-average molecular weight of 1,980 (GPC molecular weight). For the solids in the solution, the reactive silicon group amount was 0.72 mmol/g, and the sulfur atom concentration was 10,948 ppm.

### (Synthesis Example 17)

A four-necked flask equipped with a stirrer was charged with 48.0 parts by weight of isobutanol, which was heated to 105°C under nitrogen atmosphere. To the heated isobutanol was added dropwise over 5 hours a liquid mixture prepared by dissolving 42.4 parts by weight of methyl methacrylate, 10.3 parts by weight of butyl acrylate, 7.0 parts by weight of stearyl methacrylate, 30.3 parts by weight of the polyfunctional macromonomer (a2-2) prepared in Synthesis Example 2, 0.9 parts by weight of 3-methacryloxypropyltrimethoxysilane, 9.1 parts by weight of 3-mercaptopropyltrimethoxysilane, and 0.3 parts by weight of 2,2'-azobis(2-methylbutyronitrile) in 9.8 parts by weight of isobutanol. A liquid mixture prepared by dissolving 0.2 parts by weight of 2,2'-azobis(2-methylbutyronitrile) in 7.9 parts by weight of isobutanol was further added, and the polymerization was allowed to proceed at 105°C for 2 hours to give an isobutanol solution (solid content = 60%) of a reactive silicon group-containing (meth)acrylic ester copolymer (P-4) having a number-average molecular weight of 1,830 (GPC molecular weight). For the solids in the solution, the polyfunctional macromonomer amount was 0.014 mmol/g, the reactive silicon group amount was 0.50 mmol/g, and the sulfur atom concentration was 14,846 ppm.

### (Synthesis Example 18)

A four-necked flask equipped with a stirrer was charged with 49.1 parts by weight of isobutanol, which was heated to 105°C under nitrogen atmosphere. To the heated isobutanol was added dropwise over 5 hours a liquid mixture prepared by dissolving 40.1 parts by weight of methyl methacrylate, 9.7 parts by weight of butyl acrylate, 6.6 parts by weight of stearyl methacrylate, 28.7 parts by weight of the polyfunctional macromonomer (a2-2) prepared in Synthesis Example 2, 6.3 parts by weight of 3-methacryloxypropyltrimethoxysilane, 8.6 parts by weight of 3-mercaptopropyltrimethoxysilane, and 0.3 parts by weight of 2,2'-azobis(2-methylbutyronitrile) in 9.3 parts by weight of isobutanol. A liquid mixture prepared by dissolving 0.2 parts by weight of 2,2'-azobis(2-methylbutyronitrile) in 7.4 parts by weight of isobutanol was further added, and the polymerization was allowed to proceed at 105°C for 2 hours to give an isobutanol solution (solid content = 60%) of a reactive silicon group-containing (meth)acrylic ester copolymer (P-5) having a number-average molecular weight of 1,920 (GPC molecular weight). For the solids in the solution, the polyfunctional macromonomer amount was 0.014 mmol/g, the reactive silicon group amount was 0.69 mmol/g, and the sulfur atom concentration was 14,037 ppm.

### (Synthesis Example 19)

A four-necked flask equipped with a stirrer was charged with 44.4 parts by weight of isobutanol, which was heated to 105°C under nitrogen atmosphere. To the heated isobutanol was added dropwise over 5 hours a liquid mixture prepared by dissolving 40.8 parts by weight of methyl methacrylate, 54.2 parts by weight of butyl acrylate, 0.5 parts by weight of 2-ethylhexyl acrylate, 0.5 parts by weight of stearyl methacrylate, 0.5 parts by weight of 3-methacryloxypropyltrimethoxysilane, 3.5 parts by weight of 3-mercaptopropyltrimethoxysilane, and 0.5 parts by weight of 2,2'-azobis(2-methylbutyronitrile) in 15.6 parts by weight of isobutanol. A liquid mixture prepared by dissolving 0.1 parts by weight of 2,2'-azobis(2-methylbutyronitrile) in 4.7 parts by weight of isobutanol was further added, and the polymerization was allowed to proceed at 105°C for 2 hours to give an isobutanol solution (solid content = 60%) of a reactive silicon group-containing (meth)acrylic ester copolymer (P-6) having a number-average molecular weight of 3,770 (GPC molecular weight). For the solids in the solution, the reactive silicon group amount was 0.20 mmol/g, and the sulfur atom concentration was 5,716 ppm.

### (Examples 1 to 3 and Comparative Examples 2 and 3)

Isobutanol was removed by thermal evaporation from those isobutanol solutions of the (meth)acrylic ester copolymers (A-1) to (A-3) which were obtained in Synthesis Examples 5 to 7 and those isobutanol solutions of the (meth)acrylic ester copolymers (P-2) and (P-3) which were obtained in Synthesis Examples 15 and 16. The viscosity of each of the resulting polymers was measured by the method described below.

### (Viscosity)

A cone plate (2°) with a diameter of 25 mm was used as a jig, and the gap was set to 60 µm. The viscosity of each polymer was measured at a rotational speed of 0.1 sec⁻¹. The device used was a rheometer manufactured by TA instruments (ARES-G2). The results obtained are shown in Table 1.

**[Table 1]**

| | | Ex. 1 | Ex. 2 | Ex. 3 | Comp. Ex. 1 | Comp. Ex. 2 | Comp. Ex. 3 |
|---|---|---|---|---|---|---|---|
| Polymer (A) or (P) | | A-1 | A-2 | A-3 | P-1 | P-2 | P-3 |
| Monomer component | Monomer(a1):BA⁽¹⁾ | 59.7 (84.3 mol%) | 41.0 (79.9 mol%) | 47.4 (78.6 mol%) | 63.1 (91.0 mol%) | 87.4 (93.6 mol%) | 49.7 (75.7 mol%) |
| | Monomer(a1): SMA⁽²⁾⁾ | 10.1 (6.0 mol%) | 7.0 (5.7 mol%) | 8.0 (5.6 mol%) | 12.6 (6.5 mol%) | 9.8 (4.4 mol%) | 100 (6.4 mol%) |
| | Monomer(a4): TSMA⁽³⁾ | 1.0 (0.8 mol%) | 0.7 (0.8 mol%) | 0.8 (0.8 mol%) | 1.2 (0.9 mol%) | 1.0 (0.6 mol%) | 10.0 8.7 mol%) |
| | Chain transfer agent (a3): T-MSi⁽⁴⁾ | 7.3 (7.4 mol%) | 6.9 (9.8 mol%) | 10.5 (12.6 mol%) | | 1.8 (1.4 mol%) | 7.2 (7.9 mol%) |
| | Polyfunctional macromonomer (a2-1) | 21.9 (1.5 mol%) | 44.4 (3.8 mol%) | 33.3 (2.4 mol%) | 23.1 (1.6 mol%) | | |
| | Allyl group-containing polyoxyalkylene polymer (p-1) | | | | | | 23.1 (1.3 mol%) |
| (a2)/(a3) (molar ratio) | | 0.20 | 0.39 | 0.19 | - | - | - |
| Sulfur atom concentration (ppm) | | 10941 | 10291 | 15961 | Gelation | 2939 | 10948 |
| Average number of (a2) per molecule of (A) | | 0.17 | 0.37 | 0.18 | | - | - |
| Mw(A)/Mw(a2) | | 2.24 | 4.91 | 1.92 | | - | - |
| Mn | | 2470 | 3000 | 1910 | | 3730 | 1980 |
| Mw | | 10880 | 23860 | 9350 | | 7960 | 4880 |
| Mw/Mn | | 4.4 | 8.0 | 4.9 | | 2.1 | 2.5 |
| Viscosity (Pa . S) | | 3.8 | 9.6 | 2.3 | | 9.5 | 0.9 |

| | | | | | | | |
|---|---|---|---|---|---|---|---|
| (1) n-Butyl acrylate (2) Stearyl methacrylate (3) 3- Methacryloxypropyltrimethoxysilane (4) 3-Mercaptopropyltrimethoxysilane | | | | | | | |

In Examples 1 to 3, as shown in Table 1, the reactive silicon group-containing (meth)acrylic ester copolymers (A-1) to (A-3) were successfully synthesized by copolymerizing both the polyfunctional macromonomer (a2) which is a polyoxyalkylene polymer having more than one (meth)acryloyl groups per molecule and the chain transfer agent (a3) having a mercapto group. Each of the copolymers (A-1) to (A-3) includes a block copolymer formed by copolymerization of the polyfunctional macromonomer (a2) with another monomer such as butyl acrylate.

In the case where copolymerization was carried out without the use of the chain transfer agent (a3) having a mercapto group (Comparative Example 1), gelation occurred in the course of the polymerization, resulting in a failure to obtain a copolymer.

The (meth)acrylic ester copolymer (P-2) of Comparative Example 2 is a random copolymer synthesized without the use of the polyfunctional macromonomer (a2). Table 1 reveals that the viscosity relative to the weight-average molecular weight (Mw) was lower for the (meth)acrylic ester copolymers (A-1) to (A-3) than for the (meth)acrylic ester copolymer (P-2). For example, the viscosity of the copolymer (A-3) was about a quarter of that of the polymer (P-2) even though the copolymer (A-3) had a somewhat higher weight-average molecular weight than the copolymer (P-2). The viscosity of the copolymer (A-2) was similar to that of the copolymer (P-2) even though the weight-average molecular weight of the copolymer (A-2) was about three times higher than that of the copolymer (P-2).

The (meth)acrylic ester copolymer (P-3) of Comparative Example 3 is a copolymer synthesized using the allyl group-containing polyoxyalkylene polymer (p-1) instead of the acryloyl group-containing polyoxyalkylene polymer (a2-1). The weight-average molecular weight (Mw) of the (meth)acrylic ester copolymer (P-3) indicates that the polymer (p-1) underwent little copolymerization. That is, it is seen that the (meth)acrylic ester copolymers (A-1) to (A-3) had a low viscosity despite the polyfunctional macromonomer (a2) being copolymerized.

### (Examples 4 to 7 and Comparative Examples 4 to 6)

Those isobutanol solutions of the (meth)acrylic ester copolymers (A-4) to (A-7) which were obtained in Synthesis Examples 8 to 11 and those isobutanol solutions of the (meth)acrylic ester copolymers (P-4) to (P-6) which were obtained in Synthesis Examples 17 to 19 were used to obtain cured products, and the tensile properties of the cured products were measured by the method described below.

### (Tensile Properties)

Each polymer solution was mixed with 1 part by weight (amount relative to 100 parts by weight of the solids in the polymer solution) of NEOSTANN U-20 (dibutyltin dibutylmaleate, manufactured by Nitto Kasei Co., Ltd.) serving as a curing catalyst, and the mixture was formed into a sheet with a thickness of 100 µm. The resulting sheet was cured and aged at 23°C and 50% RH for 2 weeks. The aged sheet was cut to prepare a strip-shaped specimen with a size of 70 mm × 10 mm, and the tensile properties of the specimen were measured at 23°C with a chuck-to-chuck distance of 40 mm. The measured properties were modulus at 30% elongation (M30), tensile strength at break (TB), elongation at break (EB), and Young's modulus. The measurement of the tensile properties was carried out using Autograph (AGS-X) manufactured by Shimadzu Corporation at a tensile speed of 20 mm/min. The results obtained are shown in Table 2.

**[Table 2]**

| | | Ex. 4 | Ex. 5 | Ex. 6 | Ex. 7 | Comp. Ex. 4 | Comp. Ex. 5 | Comp. Ex. 6 |
|---|---|---|---|---|---|---|---|---|
| Polymer (A) or (P) | | A-4 | A-5 | A-6 | A-7 | P-4 | P-5 | P-6 |
| Monomer component | Monomer(a1): MMA⁽¹⁾ | 46.0 (80.2 mol%) | 51.4 (80.3 mol%) | 51.5 (79.9 mol%) | 50.9 (79.7 mol%) | 42.4 (74.6 mol%) | 40.1 (71.7 mol%) | 40.8 (50.2 mol%) |
| | Monomer(a1): BA⁽²⁾ | 11.2 (13.7 mol%) | 12.5 (13.7 mol%) | 13.5 (14.8 mol%) | 12.3 (13.6 mol%) | 10.3 (12.8 mol%) | 9.7 (123 mol%) | 54.2 (41i9 mol%) |
| | Monomer(a1): 2-EHA⁽³⁾ | | | | | | | 0.5 (0.3 mol%) |
| | Monomer(a1): SMA⁽⁴⁾ | 7.6 (3.9 mol%) | 8.5 (3.9 mol%) | 8.5 (3.9 mol%) | 8.4 (3.9 mol%) | 7.0 (3.6 mol%) | 6.6 (3.5 mol%) | 0.5 (0.2 mol%) |
| | Monomer (a4): TSMA⁽⁵⁾ | 1.0 (0.7 mol%) | 1.1 (0.7 mol%) | | 2.2 (1.4 mol%) | 0.9 (0.6 mol%) | 6.3 (4.5 mol%) | 0.5 (0.2 mol%) |
| | Chain transfer agent (a3): T-MSi⁽⁶⁾ | 1.3 (1.2 mol%) | 1.5 (1.2 mol%) | 1.5 (1.2 mol%) | | 9.1 (8.1 mol%) | 8.6 (7.8 mol%) | 3.5 (2.2 mol%) |
| | Chain transfer agent (a3): n-DM⁽⁷⁾ | | | | 1.5 (1.2 mol%) | | | |
| | Polyfunctional macromonomer (a2-2) | 32.9 (0.3 mol%) | 25.0 (0.2 mol%) | 25.0 (0.2 mol%) | 24.7 (0.2 mol%) | 30.3 (0.3 mol%) | 28.7 (0.2 mol%) | |
| (a2)/(a3) (molar ratio) | | 0.23 | 0.16 | 0.16 | 0.16 | 0.03 | 0.03 | - |
| Methacrylic ester in (a1) ((a1)+(a3)+(a4)) (%) | | 79.9 | 799 | 80.0 | 78.8 | 70.9 | 65.5 | 41.3 |
| Sulfur atom concentration (ppm) | | 2149 | 2402 | 2401 | 2417 | 14846 | 14037 | 5716 |
| Average number of (a2) per molecule of (A) | | 0.11 | 0.10 | 0.09 | 0.09 | 0.01 | 0.03 | - |
| Mw(A)/Mw(a2) | | 1.87 | 1.45 | 1.42 | 1.43 | 0.45 | 0.47 | - |
| Mn | | 7410 | 8120 | 7930 | 7610 | 1830 | 1920 | 3770 |
| Mw | | 46570 | 36050 | 35440 | 35670 | 11260 | 11680 | 8340 |
| Mw/Mn | | 6.3 | 4.4 | 4.5 | 4.7 | 6.2 | 6.1 | 2.2 |
| Tensile properties | M30 (MPa) | 0.2 | 1.1 | 0.4 | 0.7 | 0.07 | 0.6 | Sample preparetion was impossible |
| | TB (MPa) | 2.1 | 6.2 | 2.9 | 4.7 | 0.3 | 1.1 | |
| | EB (%) | 560 | 375 | 903 | 409 | 893 | 48 | |
| | Young's modulus (MPa) | 8 | 41 | 18 | 29 | < 1 | 5 | |

| | | | | | | | | |
|---|---|---|---|---|---|---|---|---|
| (1) Methyl methacrylate (2) n-Butyl acrylate (3) 2-Ethylhexyl acrylate (4) Stearyl methacrylate (5) 3-Methacryloxypropyltrimethoxysilane (6) 3-Mercaptopropyltrimethoxysilane (7) n-Dodecyl mercaptan | | | | | | | | |

As seen from Table 2, the cured products obtained from the (meth)acrylic ester copolymers (A-4) to (A-7) of Examples 4 to 7 exhibited higher values of 30% elongation (M30), tensile strength at break (TB), and Young's modulus than the cured product obtained from the (meth)acrylic ester copolymer (P-4) of Comparative Example 4 in which the ratio of the amount of the polyfunctional macromonomer amount (a2) to the amount of the chain transfer agent (a3) having a mercapto group was low.

For the (meth)acrylic ester copolymer (P-5) of Comparative Example 5, the reactive silicon group amount was increased by increasing the amount of the monomer (a4) having a reactive silicon group and a polymerizable unsaturated group relative to that for the copolymer (P-4) of Comparative Example 4. Comparative Example 5 exhibited slightly higher values of tensile strength and Young's modulus than Comparative Example 4; however, the value of elongation was significantly lower in Comparative Example 5 than in Comparative Example 4. In Examples 4 to 6, the values of tensile strength and Young's modulus were higher than in Comparative Example 5, and the value of elongation was also high.

As to the (meth)acrylic ester copolymer (P-6) of Comparative Example 6 which was synthesized without the use of the polyfunctional macromonomer (a2), a specimen was not able to be prepared from the copolymer (P-6) because the cured product of the copolymer (P-6) was extremely soft.

### (Examples 8 and 9)

The solutions of the (meth)acrylic ester copolymers (A-8) and (A-9), which were obtained in Synthesis Examples 12 and 13 and each of which was a solution in a mixture of an aromatic hydrocarbon solvent and an aliphatic hydrocarbon solvent, were used to obtain cured products, and the tensile properties of the cured products were measured by the method described above.

**[Table 3]**

| | | Ex. 8 | Ex. 9 |
|---|---|---|---|
| Polymer (A) | | A-8 | A-9 |
| Monomer component | Monomer (a1): MMA⁽¹⁾ | 55.1 (84.6 mol%) | 54.6 (84.0 mol%) |
| | Monomer (a1): BA⁽²⁾ | 8.8 (9.5 mol%) | 8.7 (9.5 mol%) |
| | Monomer (a1): SMA⁽⁴⁾ | 8.1 (3.7 mol%) | 8.0 (3.6 mol%) |
| | Monomer (a4): TSMA⁽⁵⁾ | 1.5 (0.9 mol%) | 1.5 (0.9 mol%) |
| | Chain transfer agent (a3): T-MSi⁽⁶⁾ | 1.5 (1.2 mol%) | 2.4 (1.9 mol%) |
| | Polyfunctional macromonomer (a2-3) | 25.0 (0.1 mol%) | 24.8 (0.1 mol%) |
| (a2)/(a3) (molar ratio) | | 0.12 | 0.07 |
| Methacrylic ester in (a1)/ ((a1)+(a3)+(a4)) (%) | | 73.5 | 72.6 |
| Sulfur atom concentration (ppm) | | 2396 | 3912 |
| Average number of (a2) per molecule of (A) | | 0.04 | 0.05 |
| Mw(A)/Mw(a2) | | 0.93 | 0.73 |
| Mn | | 4860 | 5360 |
| Mw | | 32610 | 25760 |
| Mw/Mn | | 6.7 | 4.8 |
| Tensile properties | M30 (MPa) | 2.7 | 2.5 |
| | TB (MPa) | 5.3 | 3.8 |
| | EB (%) | 320 | 130 |
| | Young's modulus (MPa) | 110 | 100 |

| | | | |
|---|---|---|---|
| (1) Methyl methacrylate (2) n-Butyl acrylate (4) Stearyl methacrylate (5) 3-Methacryloxypropyltrimethoxysilane (6) 3-Mercaptopropyltrimethoxysilane | | | |

As seen from Table 3, the cured products obtained from the (meth)acrylic ester copolymers (A-8) and (A-9) of Examples 8 and 9 had a high Young's modulus.

## Claims

1. A (meth)acrylic ester copolymer (A) comprising a reactive silicon group represented by the following formula (1): -SiR¹_{c}X_{3 c} (1), wherein R¹ is a substituted or unsubstituted hydrocarbon group having 1 to 20 carbon atoms, X is a hydroxy group or a hydrolyzable group, and c is 0 or 1, wherein
a monomer component of the copolymer (A) comprises:
a (meth)acrylic ester (a1);
a polyoxyalkylene polymer (a2) having more than one (meth)acryloyl groups per molecule; and
a chain transfer agent (a3) having a mercapto group,
a molar ratio of the polyoxyalkylene polymer (a2) to the chain transfer agent (a3) having a mercapto group is 0.06 or more, and
the monomer component further comprises a monomer (a4) having a reactive silicon group and a polymerizable unsaturated group, and/or the chain transfer agent (a3) having a mercapto group further has a reactive silicon group.

2. The (meth)acrylic ester copolymer (A) according to claim 1, wherein a value calculated by the following expression is 0.65 or more: (weight-average molecular weight of copolymer (A))/(weight-average molecular weight of polyoxyalkylene polymer (a2)).

3. The (meth)acrylic ester copolymer (A) according to claim 1 or 2, wherein the polyoxyalkylene polymer (a2) constitutes 0.08 to 6.0 mol% of the monomer component.

4. The (meth)acrylic ester copolymer (A) according to any one of claims 1 to 3, wherein the chain transfer agent (a3) having a mercapto group constitutes 0.4 to 15 mol% of the monomer component.

5. The (meth)acrylic ester copolymer (A) according to any one of claims 1 to 4, wherein the polyoxyalkylene polymer (a2) has a number-average molecular weight of 50,000 or less.

6. The (meth)acrylic ester copolymer (A) according to any one of claims 1 to 5, wherein the polyoxyalkylene polymer (a2) is in an amount of 60 wt% or less of the monomer component.

7. The (meth)acrylic ester copolymer (A) according to any one of claims 1 to 6, wherein the copolymer (A) has a dispersity of 3.0 to 11.0.

8. The (meth)acrylic ester copolymer (A) according to any one of claims 1 to 7, wherein c is 0 in the formula (1).

9. The (meth)acrylic ester copolymer (A) according to any one of claims 1 to 8, wherein the (meth)acrylic ester (a1) comprises at least one monomer selected from the group consisting of a methacrylic ester, isobomyl acrylate, dicyclopentenyl acrylate, and dicyclopentanyl acrylate.

10. The (meth)acrylic ester copolymer (A) according to claim 9, wherein the at least one monomer selected as the (meth)acrylic ester (a1) from the group consisting of a methacrylic ester, isobomyl acrylate, dicyclopentenyl acrylate, and dicyclopentanyl acrylate constitutes 60 wt% or more of the total monomer component excluding the polyoxyalkylene polymer (a2).

11. The (meth)acrylic ester copolymer (A) according to any one of claims 1 to 10, wherein the (meth)acrylic ester copolymer (A) has a sulfur atom concentration of 700 to 20,000 ppm.

12. A (meth)acrylic ester copolymer (A) comprising a reactive silicon group represented by the following formula (1): -SiR¹_{c}X_{3-c} (1), wherein R¹ is a substituted or unsubstituted hydrocarbon group having 1 to 20 carbon atoms, X is a hydroxy group or a hydrolyzable group, and c is 0 or 1, wherein
the copolymer (A) comprises a structure in which two first molecular chains are bonded to each other via one second molecular chain,
both ends of the second molecular chain are bonded to a non-terminal moiety of one of the first molecular chains and a non-terminal moiety of the other first molecular chain, respectively,
each of the first molecular chains comprises a molecular chain of a (meth)acrylic ester polymer,
the second molecular chain comprises a molecular chain of a polyoxyalkylene polymer,
the reactive silicon group is bonded to each of the first molecular chains,
each of the first molecular chains has, at one end thereof, a structure represented by -S-R³, wherein S is a sulfur atom and R³ is a hydrocarbon group optionally having the reactive silicon group, and
a molar ratio of the polyoxyalkylene polymer to the structure represented by -S-R³ is 0.06 or more.

13. A curable composition comprising the (meth)acrylic ester copolymer (A) according to any one of claims 1 to 12.

14. A cured product of the curable composition according to claim 13.

15. A method for producing a (meth)acrylic ester copolymer (A) having a reactive silicon group represented by the following formula (1): -SiR¹_{c}X_{3-c} (1), wherein R¹ is a substituted or unsubstituted hydrocarbon group having 1 to 20 carbon atoms, X is a hydroxy group or a hydrolyzable group, and c is 0 or 1, the method comprising:
copolymerizing a monomer component, wherein
the monomer component comprises:
a (meth)acrylic ester (a1);
a polyoxyalkylene polymer (a2) having more than one (meth)acryloyl groups per molecule; and
a chain transfer agent (a3) having a mercapto group,
a molar ratio of the polyoxyalkylene polymer (a2) to the chain transfer agent (a3) having a mercapto group is 0.06 or more, and
the monomer component further comprises a monomer (a4) having a reactive silicon group and a polymerizable unsaturated group, and/or the chain transfer agent (a3) having a mercapto group further has a reactive silicon group.
